# EUROPEAN PATENT SPECIFICATION

(11) **EP 4 361 687 B1**
(45) Date of publication and mention of the grant of the patent: **22.07.2026**
(21) Application number: 23205279.5
(22) Date of filing: 23.10.2023
(51) Int. Cl.: G02B 5/26, G02B 5/28, G02B 5/30

(54) **WAVELENGTH BAND SELECTIVE FILTERS FOR AR/VR SYSTEMS**
WELLENLÄNGENBANDSELEKTIVE FILTER FÜR AR/VR-SYSTEME
FILTRES SÉLECTIFS DE BANDE DE LONGUEUR D'ONDE POUR SYSTÈMES AR/VR

(30) Priority: 28.10.2022 US 202263381446 P; 09.10.2023 US 202318483141
(43) Date of publication of application: 01.05.2024
(73) Proprietor: Meta Platforms Technologies, LLC, Menlo Park, CA 94025 (US)
(72) Inventor: DIAZ, Liliana Ruiz, Menlo Park (US); YE, Sheng, Menlo Park (US); GAO, Weihua, Menlo Park (US); WELLS, Spencer Allan, Menlo Park (US); OUDERKIRK, Andrew John, Menlo Park (US); NIE, Zhaoyu, Menlo Park (US); BOROMAND, Arman, Menlo Park (US); RAO, Tingling, Menlo Park (US); WANG, Junren, Menlo Park (US); PURVIS, Lafe Joseph, Menlo Park (US); BAZA, Hend, Menlo Park (US)
(74) Representative: Murgitroyd & Company

(56) References cited:
- US-A- 5 238 738
- US-A1- 2005 243 425
- US-A1- 2018 074 331
- US-B1- 6 967 778

## Description

### TECHNICAL FIELD

The instant disclosure is directed generally to polymer thin films and polymer multilayers having engineered optical and mechanical properties, and more specifically to wavelength band selective (reflective or transmissive) filters, including notched reflective polarizers and notched reflectors formed from such thin films.

### BACKGROUND

Polymer materials may be incorporated into a variety of different optic and electro-optic systems, including passive and active optics and electroactive devices. Lightweight and conformable, one or more polymer layers may be incorporated into wearable devices such as smart glasses and are attractive candidates for emerging technologies including virtual reality/augmented reality devices where a comfortable, adjustable form factor is desired.

Virtual reality (VR) and augmented reality (AR) eyewear devices or headsets, for instance, may enable users to experience events, such as interactions with people in a computer-generated simulation of a three-dimensional world or viewing data superimposed on a real-world view. By way of example, superimposing information onto a field of view may be achieved through an optical head-mounted display (OHMD) or by using embedded wireless glasses with a transparent heads-up display (HUD) or augmented reality (AR) overlay. AR/VR eyewear devices and headsets may be used for a variety of purposes. Governments may use such devices for military training, medical professionals may use such devices to simulate surgery, and engineers may use such devices as design visualization aids.

These and other applications may leverage one or more characteristics of polymer materials, including the refractive index to manipulate light, thermal conductivity to manage heat, and mechanical strength and toughness to provide light-weight structural support. In various applications, optical elements and other components may include polymer thin films that have anisotropic mechanical and/or optical properties. The degree of optical or mechanical anisotropy achievable through conventional thin film manufacturing processes is typically limited, however, and is often exchanged for competing thin film properties such as flatness, toughness and/or film strength. For example, highly anisotropic polymer thin films often exhibit low strength in one or more in-plane direction, which may challenge manufacturability and limit performance.

Polymer thin films exhibiting optical anisotropy, for instance, may be incorporated into a variety of systems and devices, including birefringent gratings, reflective polarizers, optical compensators and optical retarders for systems using polarized light such as liquid crystal displays (LCDs). Birefringent gratings may be used as optical combiners in augmented reality displays, for example, and as input and output couplers for waveguides and fiber optic systems. Reflective polarizers may be used in many display-related applications, particularly in pancake optical systems and for brightness enhancement within display systems that use polarized light. For orthogonally polarized light, pancake lenses may use reflective polarizers with extremely high contrast ratios for transmitted light, reflected light, or both transmitted and reflected light.

Notwithstanding recent developments, it would be advantageous to provide optical quality polymer thin films that may be incorporated into various optical systems including display systems for artificial reality applications.

US 5 238 738 A describes A polymeric minus filter for an incident electromagnetic spectral band comprises at least one polymeric interference stack tuned to a predetermined design wavelength.

US 2018/074331 A1 describes a lens that is formed from at least two sections or bodies that are shaped to mate with each other, and a multilayer optical film is sandwiched between these two sections.

US 6 967 778 B1 describes reflective films and other optical bodies which exhibit sharp bandedges on one or both sides of the main reflection bands.

### SUMMARY

According to a first aspect, there is provided a notched filter as defined in claim 1.

The first polymer layers may each comprise an isotropic polymer thin film and the second polymer layers each comprise an anisotropic polymer thin film.

The notched filter may be arranged such that |n1x-n1y| < 0.1, n2y > 1.4, and | n2x-n2y | > 0.01.

The notched filter may be arranged such that n2y > 1.7, and | n2x - n2y| > 0.01.

The multilayer may be configured to reflect a band of incident light with a relative intensity of less than approximately 90%.

The multilayer may be configured to reflect a band of incident light with a relative intensity of approximately 100%.

The multilayer may be configured to reflect a band of incident light with a reflected bandwidth of less than approximately 100 nm.

The multilayer may be configured to transmit a band of incident light with a transmitted bandwidth of less than approximately 100 nm.

### BRIEF DESCRIPTION OF THE DRAWINGS

The accompanying drawings illustrate a number of examples and are a part of the specification. The depicted examples are each considered useful to aid in the understanding of the present disclosure, but are not necessarily embodiments of the claimed invention. Together with the following description, these drawings demonstrate and explain various principles of the present disclosure.
FIG. 1 is a schematic perspective illustration of a multilayer polymer thin film notched reflective polarizer.
FIG. 2 is a plot showing an example layout of layer thicknesses for a multilayer polymer thin film-based notched filter.
FIG. 3 is a graphic representation of the orientation of the major in-plane index (n2) in a biaxial multilayer organic crystal thin film.
FIG. 4 is a schematic illustration of an orthogonal consecutive stretching apparatus and method for deforming and orienting a polymer thin film.
FIG. 5 is a schematic view of a thin film orientation system for manufacturing an optically anisotropic polymer thin film.
FIG. 6 is a schematic view of another thin film orientation system for manufacturing an optically anisotropic polymer thin film.
FIG. 7 illustrates a roll-to-roll manufacturing configuration for conveying and orienting a polymer thin film.
FIG. 8 shows the reflective behavior within the visible spectrum for an example notched reflective polarizer over a single band.
FIG. 9 shows the reflective behavior within the visible spectrum for a further example notched reflective polarizer over multiple bands.
FIG. 10 shows the behavior of an example multilayer notched reflective polarizer over a single band within the visible spectrum.
FIG. 11 is a plot of transmissivity across the solar visible spectrum for an example notched reflector.
FIGS. 12-16 illustrate example multilayer notched reflective polarizer architectures including one more alternating organic crystal or liquid crystal-containing layers.
FIGS. 17 and 18 illustrate the impact of changing the angle of incidence (AOI) of illuminating light on the location of the stopband for an isotropic optical thin film.
FIG. 19 is a schematic cross-sectional illustration of a multilayer polymer thin film notched reflective polarizer.
FIGS. 20-22 illustrate various approaches to creating a reflective polarizer having a narrow stopband.
FIGS. 23-31 are plots of reflectance versus wavelength for example multilayer polymer thin film notched reflective polarizers for different light sources and angles of incidence.
FIG. 32 are plots showing reflection and transmission data for reflective and transmissive elements paired to mitigate blue shift effect.
FIG. 33 illustrates molecular structures that may be used to form a polymer thin film.
FIG. 34 illustrates liquid crystal structures that may be incorporated into a polymer thin film.
FIG. 35 is a schematic cross-sectional illustration of a notched reflective polarizer structure having a skin layer.
FIGS. 36-46 show the impact of layer thickness engineering for various multilayer notched reflective polarizers.
FIG. 47 is an illustration of exemplary augmented-reality glasses that may be used in connection with embodiments of this disclosure.
FIG. 48 is an illustration of an exemplary virtual-reality headset that may be used in connection with embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION

The instant disclosure is thus directed generally to polymer thin films and polymer multilayers having engineered optical and mechanical properties, and more specifically to wavelength band selective (reflective or transmissive) filters, including notched reflective polarizers and notched reflectors formed from such thin films. Such wavelength band selective filters may be referred to as "notched" filters. As used herein, a notched reflective polarizer may be configured to interact with polarized light, whereas a notched reflector may be configured to interact with non-polarized light.

According to particular embodiments, functional notched filters may be configured as notched reflective polarizers that are arranged to selectively reflect polarized light across a relatively narrow band. A relatively narrow band may be characterized by a FWHM of less than approximately 60 nm. An ultra-narrow band may be characterized by a FWHM of less than approximately 30 nm. Such notched filters may include a multilayer stack of engineered polymer thin films. Further example notched filters may include liquid crystals, organic crystals and/or inorganic crystals. Moreover, particularly for AR/VR applications, where comparative broadband reflective polarizers may scatter ambient light that adversely affects display contrast, the notched filters disclosed herein may pass ambient light. Additionally, the presently-disclosed notched reflective polarizers may be configured to transmit complementary polarizations of incident light, while reflecting only a narrowband portion of the spectrum.

According to some embodiments, a notched reflective polarizer (RP) may be configured to partially or totally reflect light having a selected polarization state across a chosen range (i.e., band) of wavelengths. A normalized reflectance may range from approximately 5% to approximately 100%, e.g., 5, 10, 20, 50, 80, 90, 95, or 100%. Light having a non-selected polarization state, or having wavelengths outside of the chosen band, may be substantially unaffected by the notched RP. Reflected light may be s-polarized (transverse electric mode) or p-polarized (transverse magnetic mode).

Whereas various embodiments and examples are described throughout the specification in the context of, and with reference to, a notched (narrow band) reflective polarizer, it will be appreciated that the instant description fully contemplates the complementary embodiments of a notched transmissive polarizer and a notched transflective polarizer, including the design, manufacture, and operation thereof.

In some examples, the reflected bandwidth (FWHM) of a notched filter may range from approximately 0.1 nm to approximately 100 nm, e.g., 0.1, 0.2, 0.5, 1, 2, 5, 10, 20, 30, 40, 50, or 100 nm, including ranges between any of the foregoing values.

A narrow band multilayer notched reflective polarizer may be characterized by 0.01 < Δnx < 0.3, where Δnx = |n1x - n2x|, e.g., Δnx < 0.1 to achieve an ultra-narrow (FWHM < 30 nm) band, and interlayer matching conditions configured to decrease internal reflections, where Δny < 0.05, e.g., Δny = 0 and Δnz < 0.05, e.g., Δnz = 0, where Δny = |n1y - n2y| and Δnz = |n1z - n2z|. According to some embodiments, n1x ≠ n1y or n2x ≠ n2y. According to some embodiments, n2x = n2y = n1y, where n1y < n1x. An average refractive index N = (nx + ny + nz)/3 for each first and second polymer layer may be greater than approximately 1.6. For some embodiments, the magnitude of AOI-induced blue shift may be decreased when n1z > 1.6, e.g., n1z > 1.7 or n1z > 1.8, with n1z > n1m or n1z = n1m (m = x or y). A narrow band multilayer notched filter may be configured to reflect display light without appreciably reflecting ambient light.

Advantages associated with the incorporation of a notched RP into augmented reality or virtual reality systems may include decreasing unwanted artifacts resulting from stray light. A notched reflector may be used to mitigate obscuration in AR headsets. Also, a notched reflector may be configured as an accommodation mirror for use in AR headsets.

A notched RP may be incorporated into augmented reality or virtual reality systems to decrease the source(s) of stray light, which may otherwise decrease display contrast. Example optical display systems may include folded optics, such as pancake lenses, Fresnel lenses, diffractive lenses, and refractive lenses. Stray light may be sourced by the ambient environment, for instance, and may be caused by reflections from the system's optical components or even reflections from a body part of the user of the system. Further light sources may include lasers or light emitting diodes, such as uLEDs and OLEDs. In some cases, a notched filter may operate on un-polarized or linearly polarized light. In some cases, a notched reflective polarizer may operate on circularly polarized or elliptically polarized light. A notched reflective polarizer may decrease the bandwidth of light that can be reflected, which may decrease the intensity of the stray light.

In some cases, a notched reflector may be used in AR systems to reduce obscuration. It may be undesirable, for instance, for people viewing an AR system during its use to see the full reflected spectrum that is intended only for the user. With a notched reflector, the total intensity of reflected light may be decreased. Further, according to some embodiments, when both the light source bandwidth and the notched reflector bandwidth are small, the reflector may be essentially "invisible" to an outside viewer.

According to further embodiments, a notched reflector may be made into an accommodation mirror for an AR display system. An accommodation mirror may be mounted in the line-of-sight of the system's user. In contrast to a full spectrum reflector (e.g., mirror) that blocks the user's view, a notched reflector may be configured to reflect only a narrow bandwidth of light, which allows the user to view the outside world. In particular embodiments, a notched reflector as disclosed herein may be oriented at an angle (e.g., 45°) with respect to a user, such as in the example of a 45° beam-splitter, which may be desirably unnoticed by an outside viewer.

As disclosed further herein, a notched filter, such as a notched reflective polarizer or notched reflector may include a multilayer stack of polymer thin films. The optical, thermal, and mechanical response of a polymer thin film may be determined by its chemical composition, the chemical structure of the polymer repeat unit, its density and extent of crystallinity, as well as the alignment of the crystals and/or polymer chains throughout the polymer matrix. Among these factors, the crystal or polymer chain alignment may dominate. In crystalline or semi-crystalline polymer thin films, an optical, thermal, or mechanical property or condition may be correlated to the degree or extent of crystal orientation, whereas the degree or extent of chain entanglement may create comparable optical, thermal, or mechanical properties in thin films that include an amorphous polymer.

As will be appreciated, for a reflective polarizer having a multilayer architecture, the path difference between reflected rays will vary as a function of the angle of incidence (AOI) of the illuminating light. As the AOI increases, the constructive interference spectral band will exhibit a shift toward lower wavelengths, i.e., a blueshift effect. By way of example, a narrowband polarizer reflecting red wavelengths at normal incidence may reflect green wavelengths for an AOI of 45°. In some embodiments, a notched reflective polarizer may be configured to minimize this blueshift effect and reflect incident light over a narrow band independent of the angle of incidence. This may be particularly advantageous for applications with large AOI requirements, such as wide field-of-view AR/VR optical displays.

An applied stress may be used to form a preferred alignment of crystals or polymer chains within a polymer thin film and induce a corresponding modification of the optical, thermal, and/or mechanical properties along different directions of the film. As disclosed further herein, during processing where a polymer thin film is stretched to induce a preferred alignment of crystals/polymer chains and an attendant modification of the refractive index/birefringence, thermal, and mechanical properties. Applicants have shown that an extrusion method can decrease the propensity for polymer chain entanglement within the extruded thin film.

An extruded polymer thin film or polymer multilayer may be stretched using single or multiple stretching events. Some stretching processes may include two or more successive stretching events. For instance, orthogonal consecutive stretching may be used to develop structural fingerprints, such as smaller lamellar thicknesses and higher degrees of polymer chain orientation at draw ratios less than the draw ratios used to achieve similar structural fingerprints via comparative single stretching (SS) or parallel consecutive stretching (PCS) techniques. Orthogonal consecutive stretching may include stretching a polymer thin film along a first in-plane axis, and then subsequently stretching the polymer thin film along a second in-plane axis that is orthogonal to the first in-plane axis.

Stretching may include a single act of stretching or plural, successive stretching events, such as along different in-plane directions of a polymer thin film. The act of stretching may be velocity limited or strain rate limited. In some embodiments, a polymer thin film may be stretched at a variable or constant velocity. In some embodiments, the polymer thin film may be stretched using a variable strain rate or a constant strain rate (e.g., 0.5/sec, 1/sec, 5/sec, or 10/sec, including ranges between any of the foregoing values). By way of example, the strain rate may decrease throughout an act of stretching and/or amongst different stretching events from an initial strain rate (e.g., 5/sec) to a final strain rate (e.g., 0.5/sec).

The crystalline content within the polymer thin film may increase during an act of stretching. Alternatively, in some embodiments, stretching may alter the orientation of crystals within a polymer thin film without substantially changing the crystalline content.

Polymer thin films may be oriented either uniaxially or biaxially and stacked as a multilayer to form a notched reflective polarizer or a notched reflector. An anisotropic polymer thin film may be formed using a thin film orientation system configured to heat and stretch a polymer thin film in at least one in-plane direction in one or more distinct regions thereof. In some embodiments, a thin film orientation system may be configured to stretch a polymer thin film, i.e., a crystallizable polymer thin film, along only one in-plane direction. For instance, a thin film orientation system may be configured to apply an in-plane stress to a polymer thin film along the x-direction while allowing the thin film to relax along an orthogonal in-plane direction (e.g., along the y-direction). As used herein, the relaxation of a polymer thin film may, in certain examples, accompany the absence of an applied stress along a relaxation direction.

According to some embodiments, within an example orientation system, a polymer thin film may be heated and stretched transversely to a direction of film travel through the system. In such embodiments, a polymer thin film may be held along opposing edges by plural movable clips slidably disposed along a diverging track system such that the polymer thin film is stretched in a transverse direction (TD) as it moves along a machine direction (MD) through heating and deformation zones of the thin film orientation system. In some embodiments, the stretching rate in the transverse direction and the relaxation rate in the machine direction may be independently and locally controlled. In certain embodiments, large scale production may be enabled, for example, using a roll-to-roll manufacturing platform.

In various examples, the extent of relaxation perpendicular to the stretch direction may be approximately equal to the square root of the stretch ratio in the stretch direction. In some embodiments, the extent of relaxation may be substantially constant throughout the stretching process(es). In further embodiments, the extent of relaxation may decrease, with greater relaxation associated with the beginning of a stretch step and lesser relaxation associated with the end of a stretch step.

Following deformation of the polymer thin film, a thermal setting can be applied to the film. The thermal setting temperature can be less than, equal to, or greater than an orientation temperature but above a glass transition temperature of the polymer. The thermal setting can be at a constant strain or a variable strain. The thermal setting may be followed by cooling of the polymer thin film. The act of cooling may include allowing the polymer thin film to cool naturally, at a set cooling rate, or by quenching, such as by purging with a low temperature gas, which may thermally stabilize the polymer thin film.

The presently disclosed polymer thin films may be characterized as optical quality polymer thin films and may form, or be incorporated into, an optical element such as a reflective polarizer or an anti-reflective coating. Optical elements may be used in various display devices, such as virtual reality (VR) and augmented reality (AR) glasses and headsets. The efficiency of these and other optical elements may depend on the degree of optical clarity, birefringence, thermal conductivity, and/or mechanical response.

As used herein, the terms "polymer thin film" and "polymer layer" may be used interchangeably. Furthermore, reference to a "polymer thin film" or a "polymer layer" may include reference to a "multilayer polymer thin film" unless the context clearly indicates otherwise.

In accordance with various embodiments, an optical element includes a notched reflective polarizer (RP). In various embodiments, the reflective polarizer may include a stack of alternating isotropic and anisotropic polymer layers arranged in an alternating ABAB... architecture. In further embodiments, an optical element includes a notched reflector. A notched reflector may include alternating isotropic polymer layers.

As used herein, an "isotropic" layer may be characterized by equivalent or substantially equivalent refractive indices. For instance, a polymer layer may have refractive indices nx, ny, nz, where nx and ny are in-plane values, and for an isotropic polymer layer, nx=ny=nz. In a further example, an isotropic polymer layer may have refractive indices that differ by no more than a specified value, D, e.g., |nx-ny| < D, |nx-nz| < D, and |ny-nz| < D, where D may be 0.1, 0.05, 0.02, or 0.01. Typically, the refractive index of a medium decreases with an increase in the wavelength of light traversing the medium. Herein, refractive index values may be defined in terms of reference wavelength, such as 460 nm, 540 nm, 589 nm, or 630 nm. According to further embodiments, in lieu of a particular reference wavelength, refractive index values may be defined with reference to the visible spectrum, e.g., approximately 400 nm to approximately 700 nm.

In particular embodiments, the layers within the stack defining a notched filter may be coextruded in a single-step process that decreases manufacturing complexity and, relative to comparative processes, obviates the creation of orange peel defects and the undesired realization of reflectivity ripple along the block axis.

An example method may include extruding alternating first and second polymer layers to form a notched filter stack. The method may further include applying an in-plane stress to the multilayer polymer thin film.

Optical properties of the RP multilayer may be tuned by applying an in-plane stress to the multilayer that induces an alignment of crystallites within the thin films and an attendant modification of refractive index and birefringence. For AR/VR applications, for example, the RP multilayer may be laminated over a transparent substrate, such as a varifocal lens.

According to various embodiments, the performance of a notched reflective polarizer may be determined by one or more of (i) the number of polymer layers in the multilayer stack, (ii) the intralayer refractive index and/or birefringence, (iii) the interlayer refractive index and/or birefringence, and (iv) the thickness and thickness profile of the polymer layers.

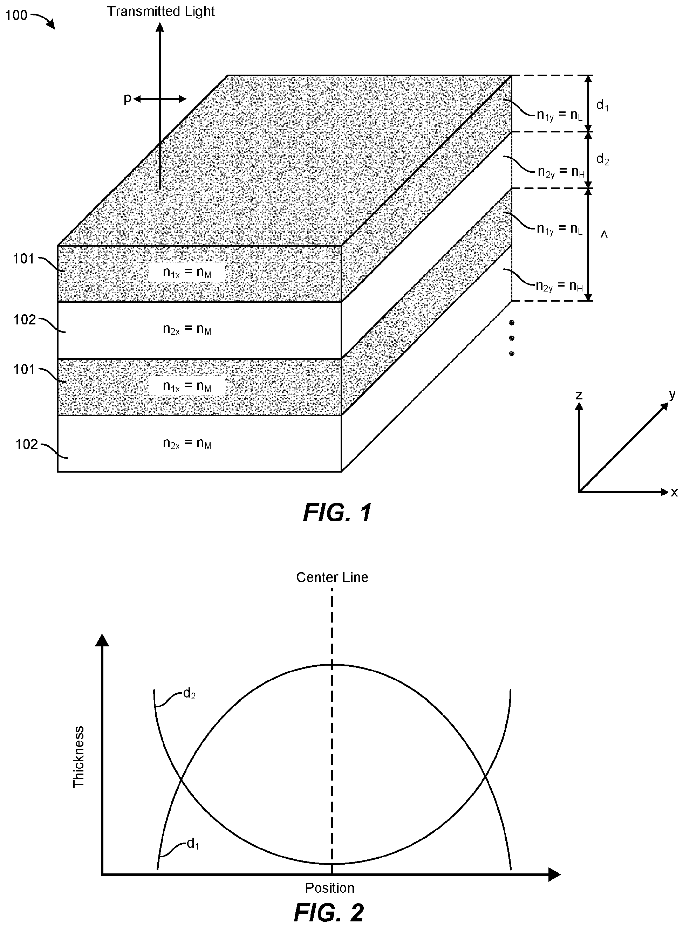

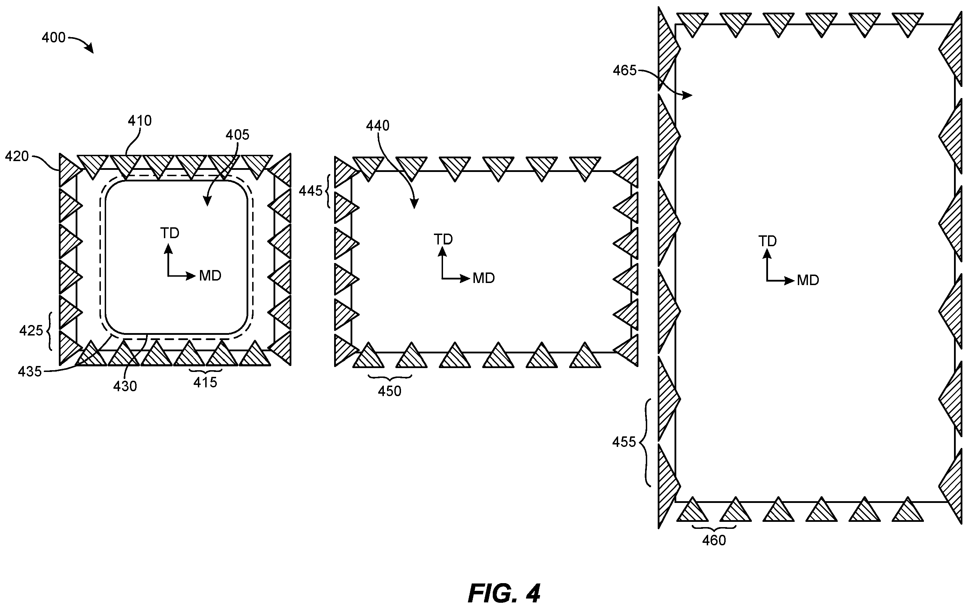

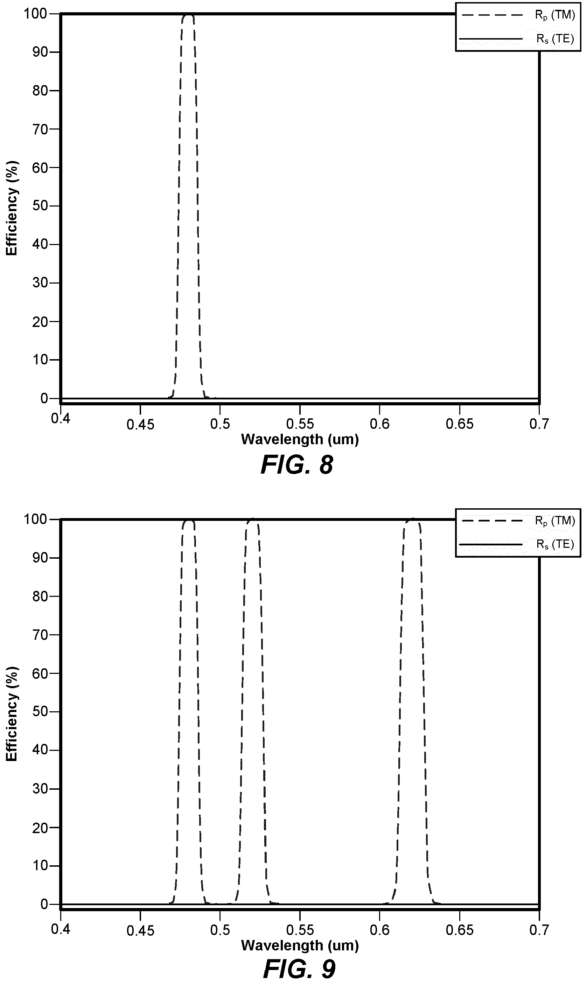

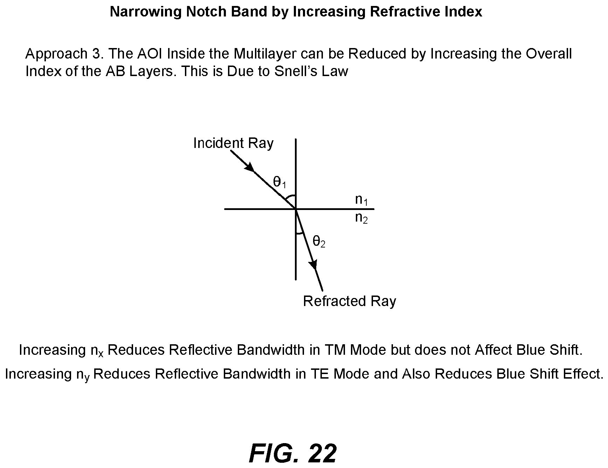

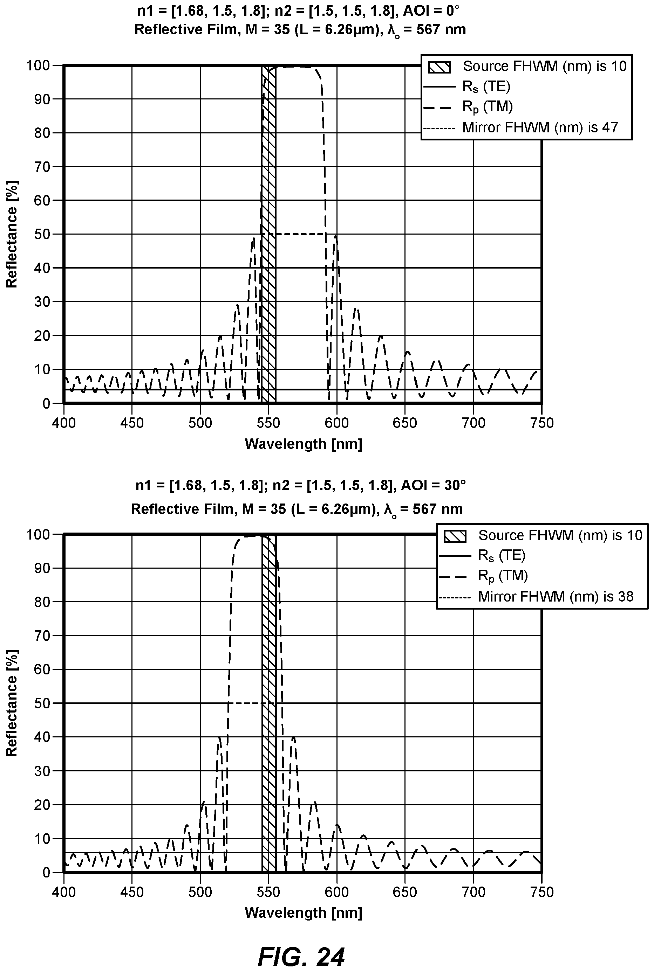

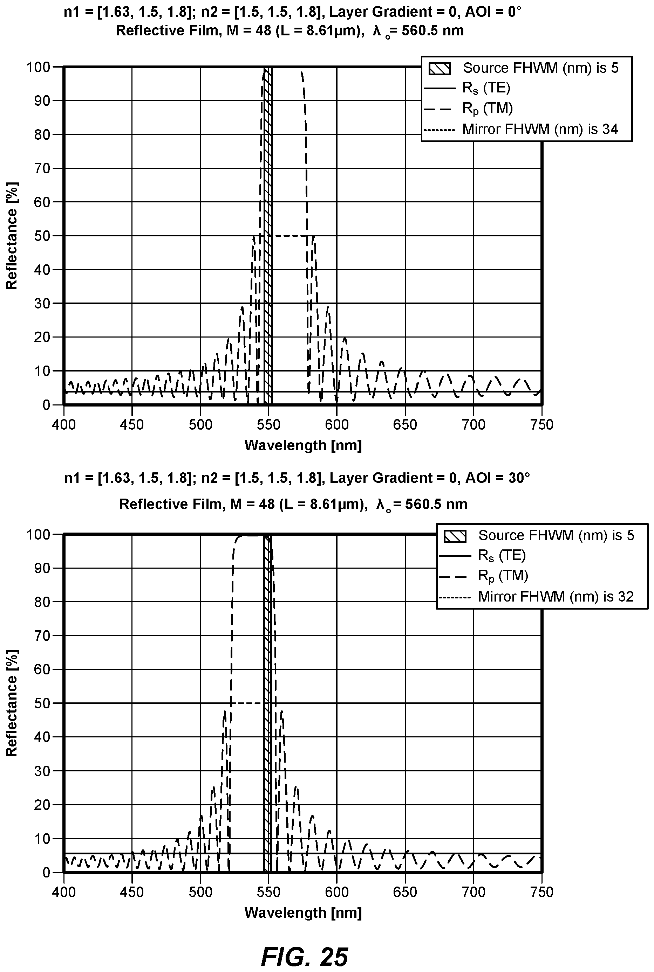

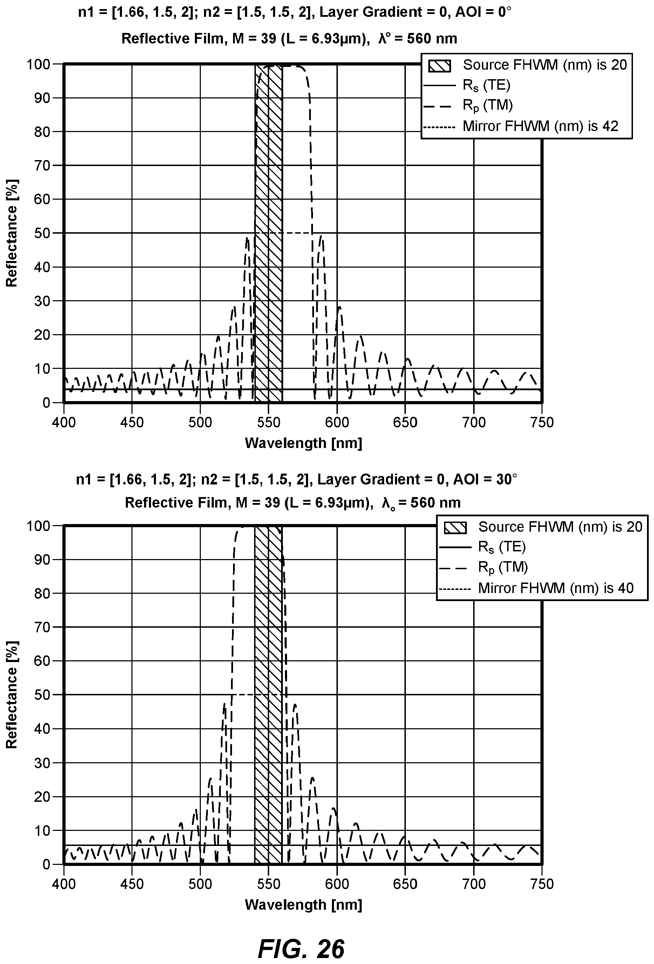

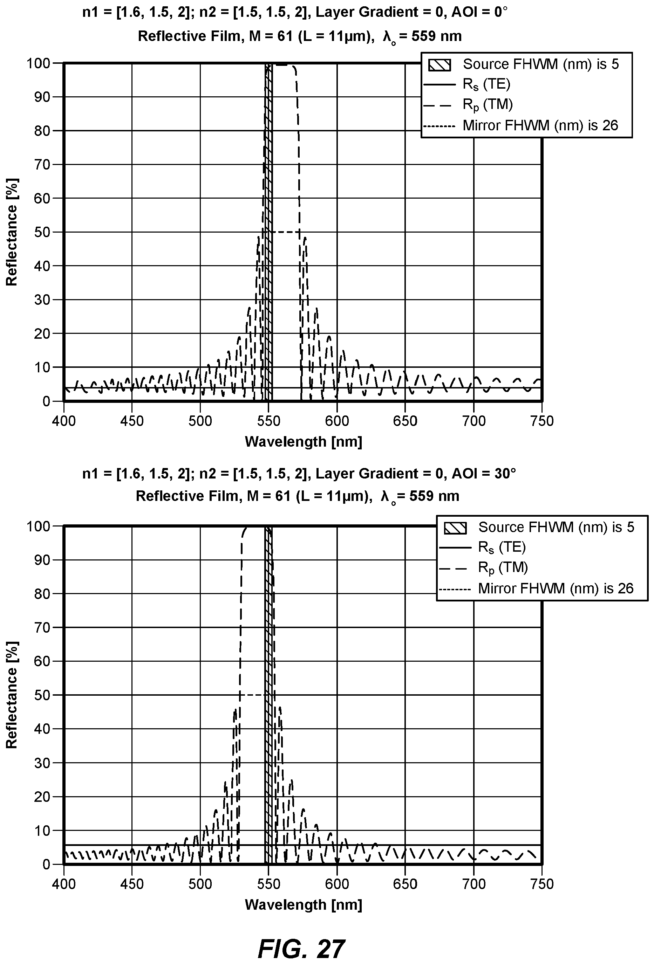

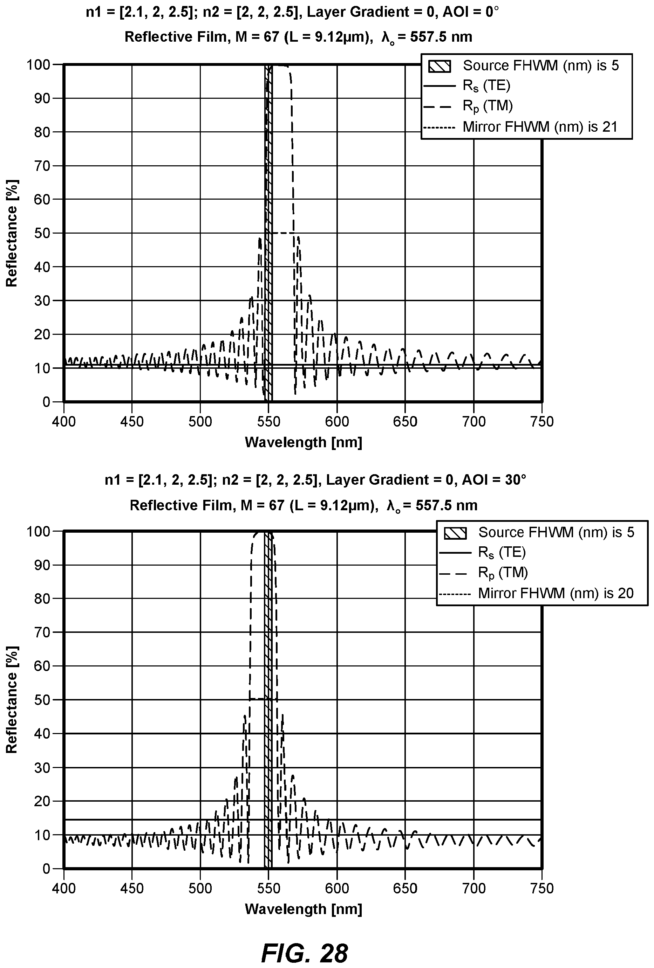

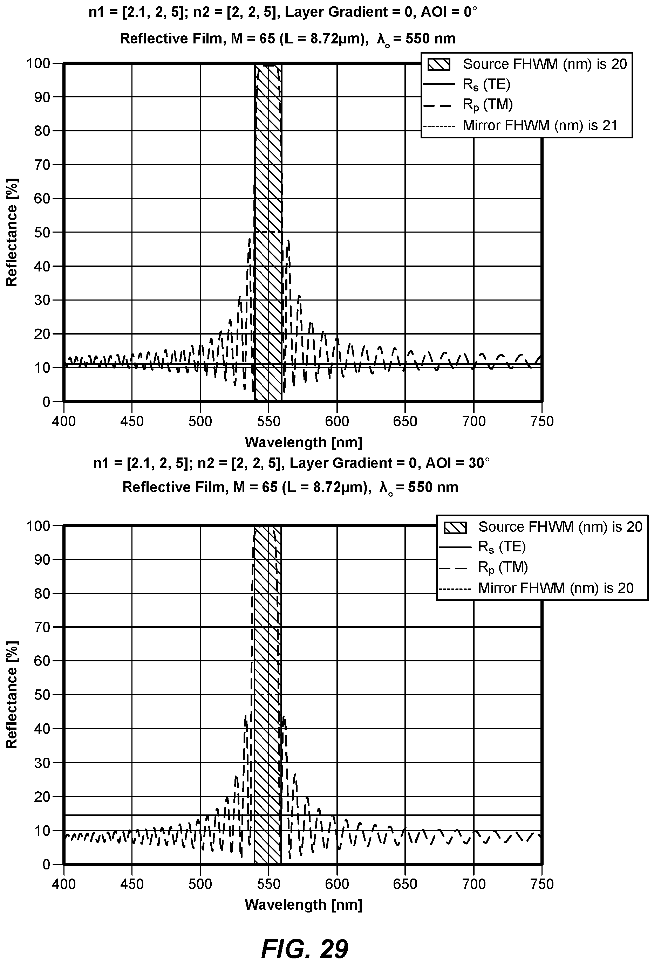

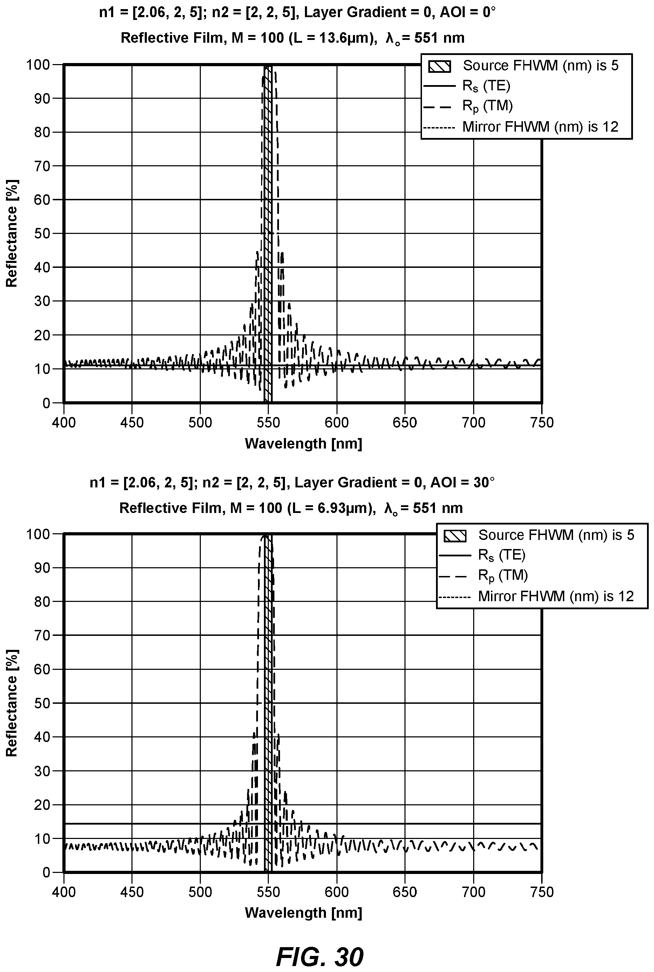

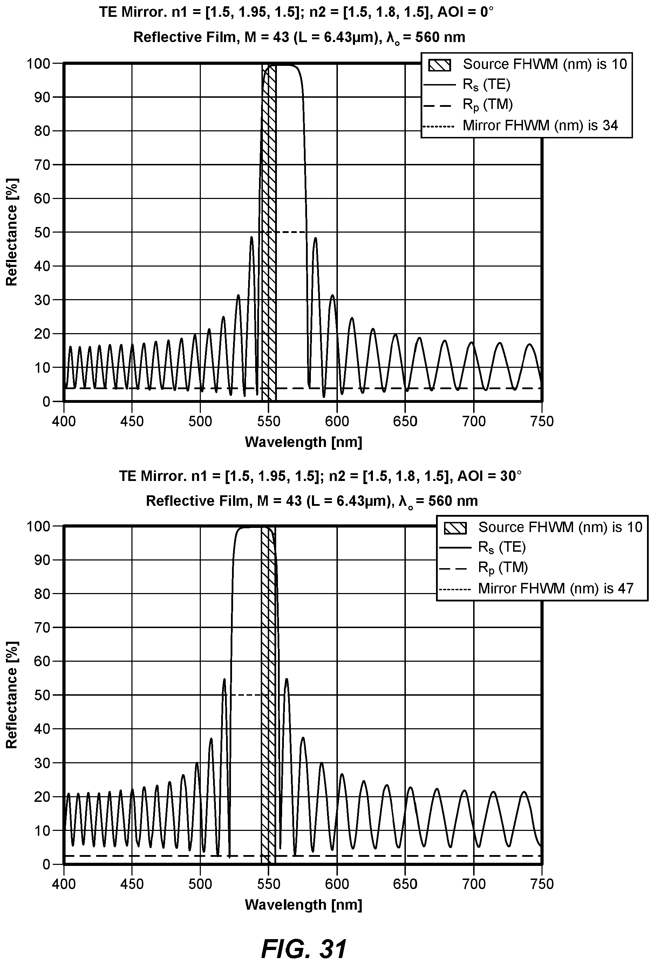

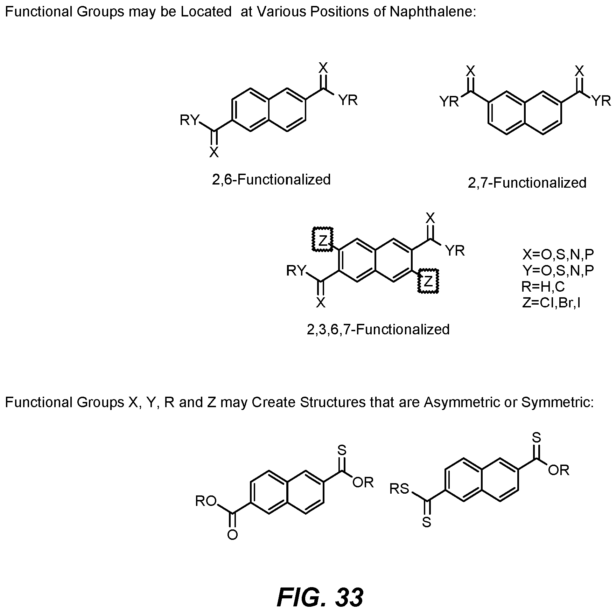

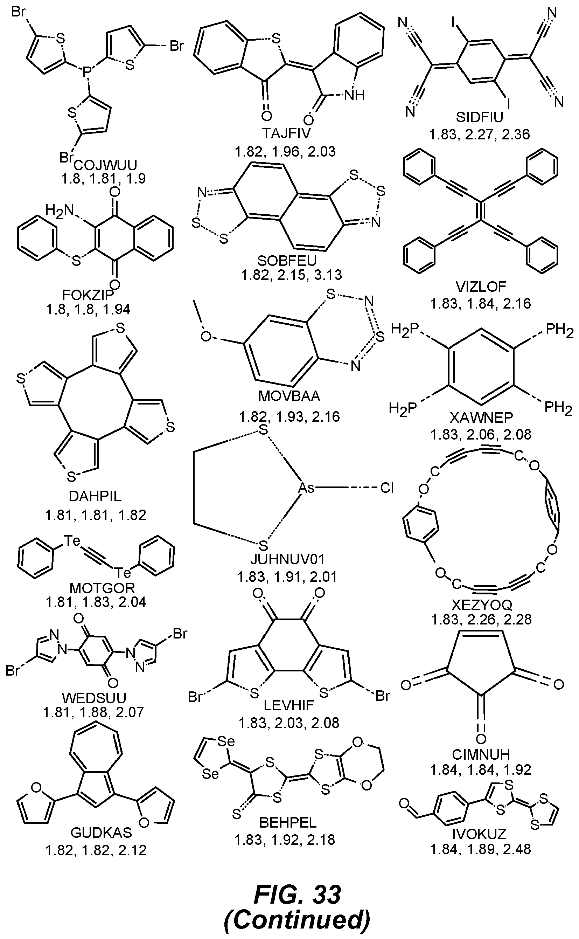

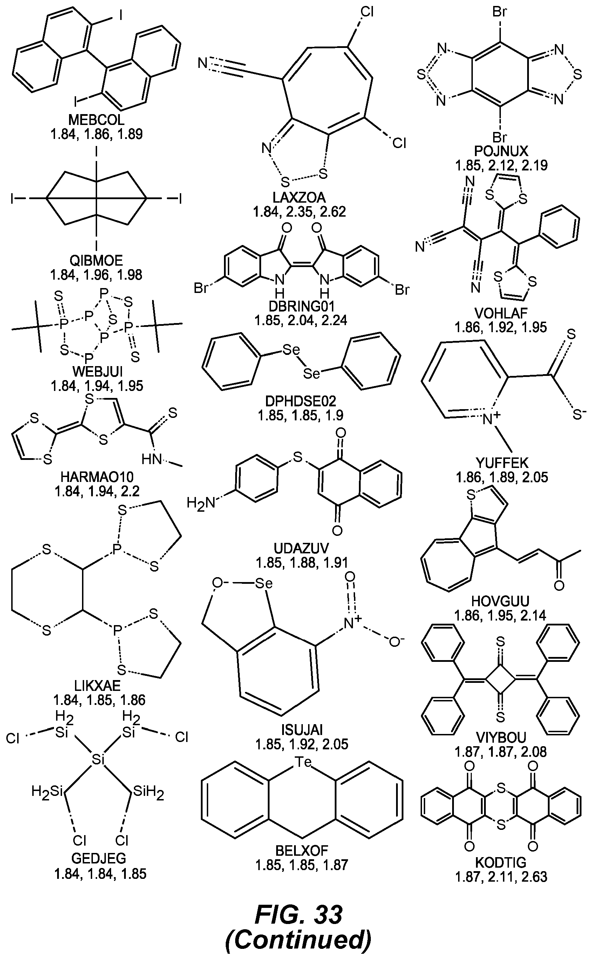

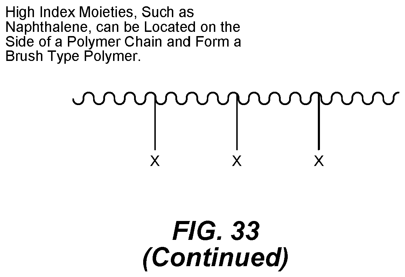

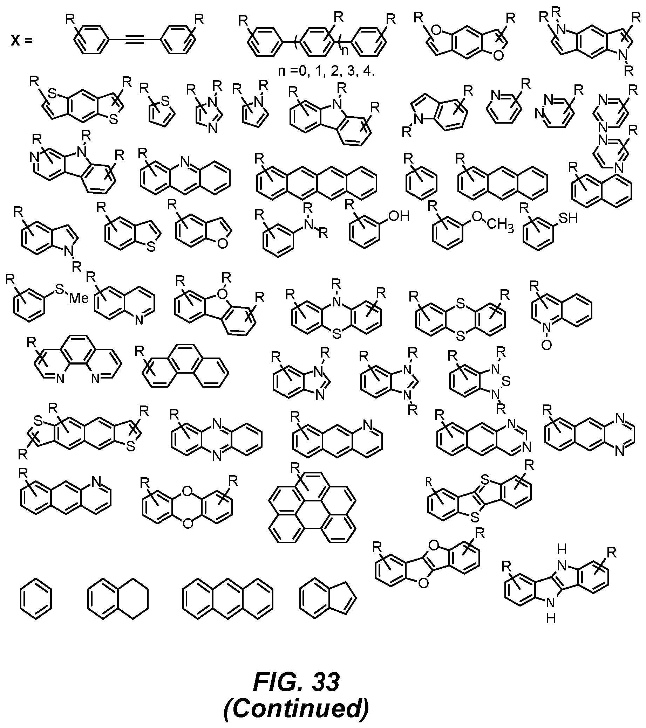

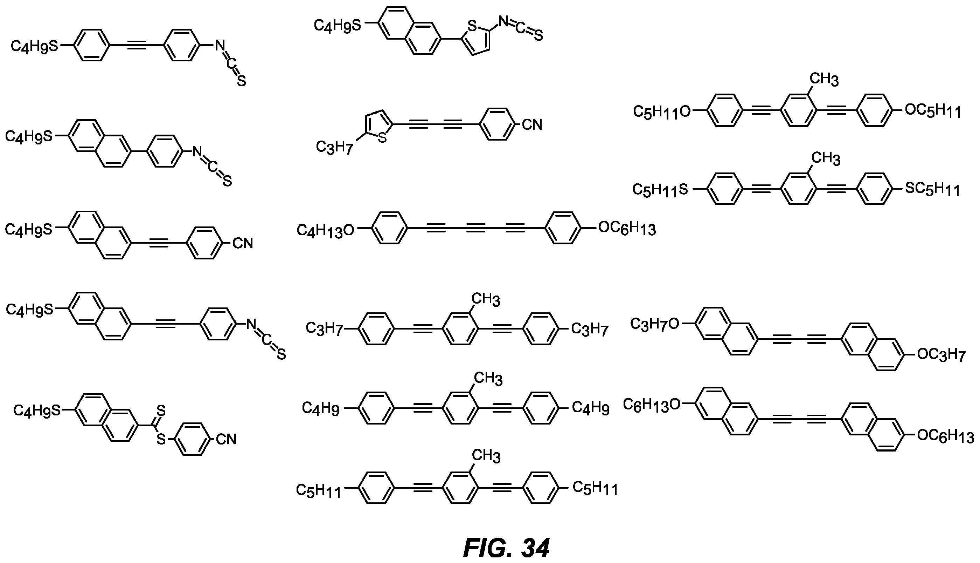

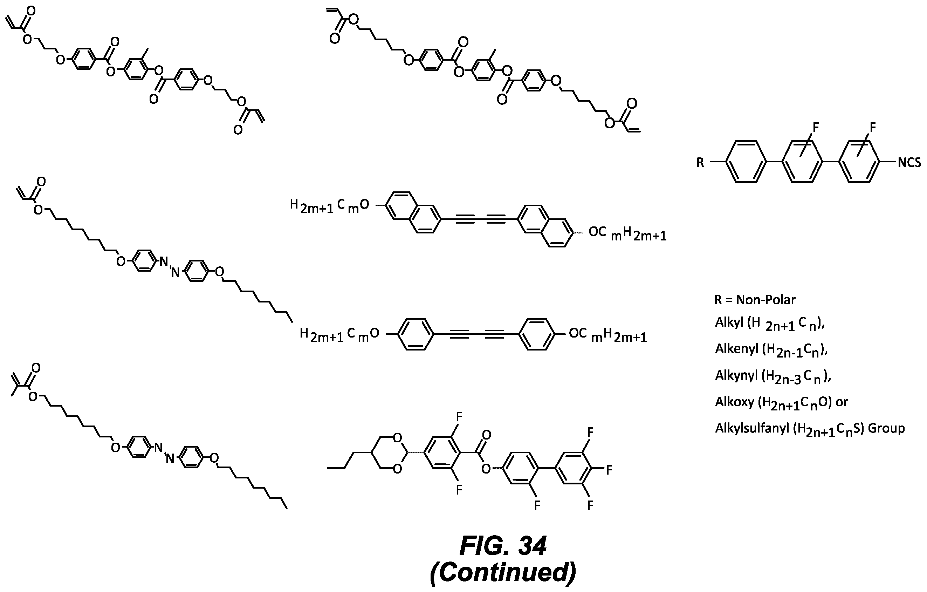

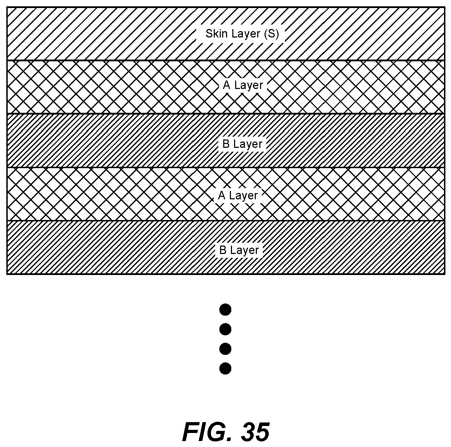

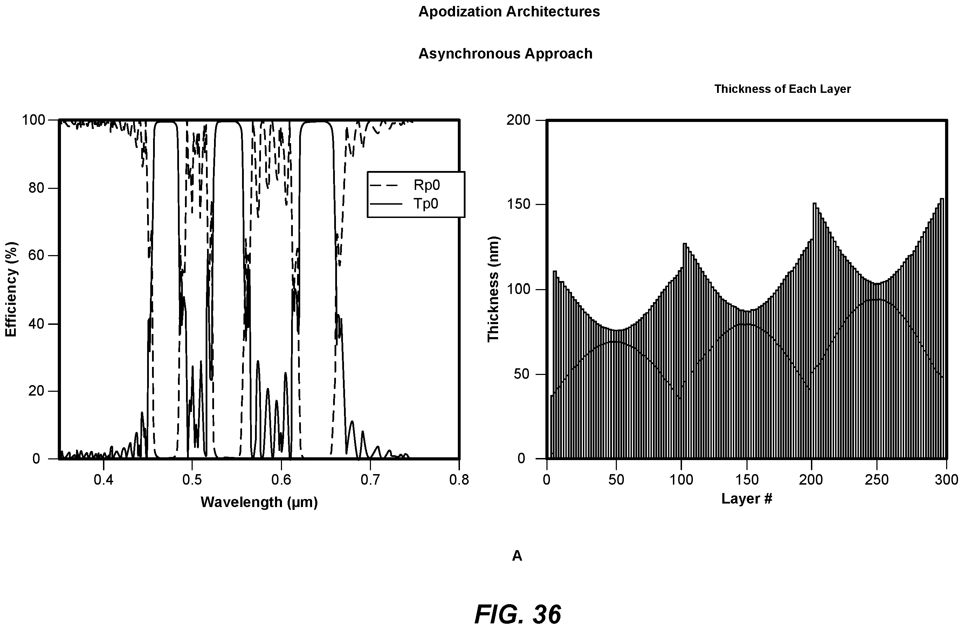

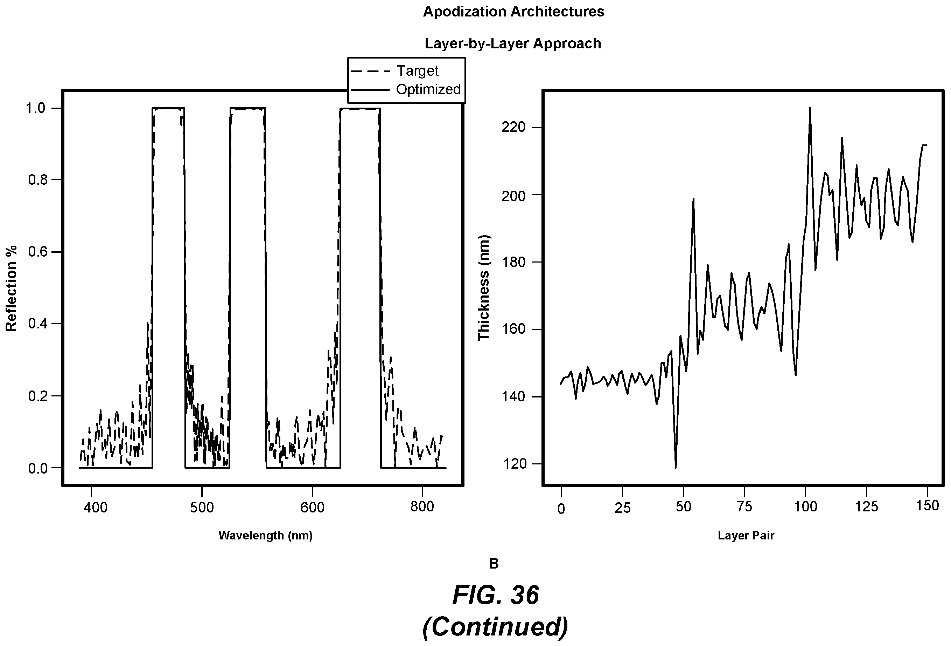

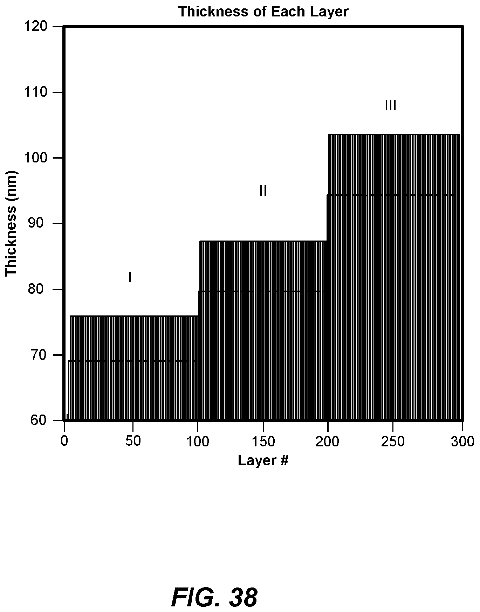

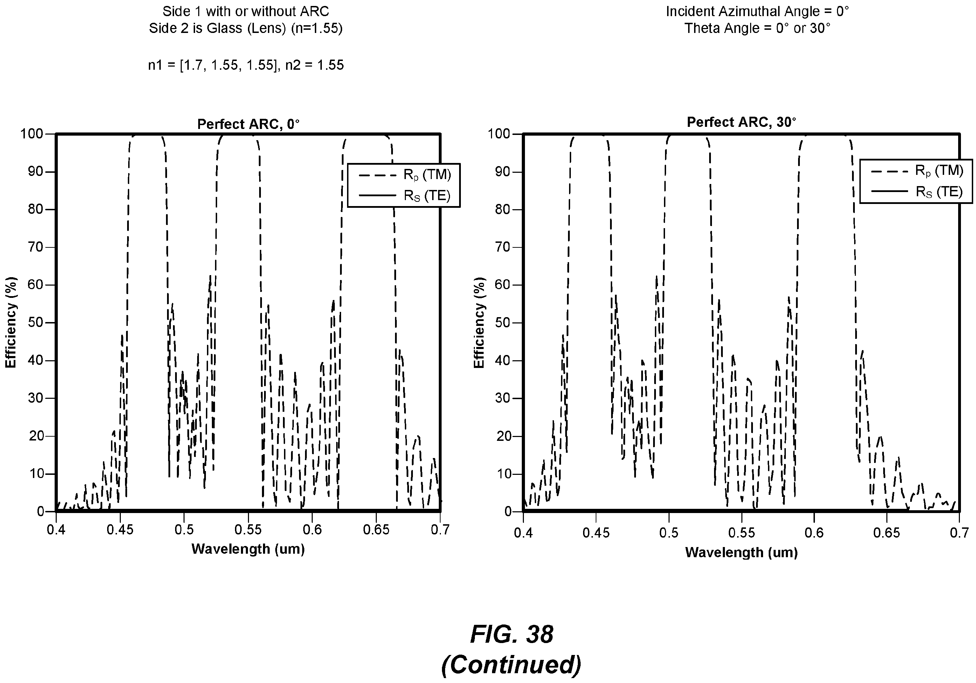

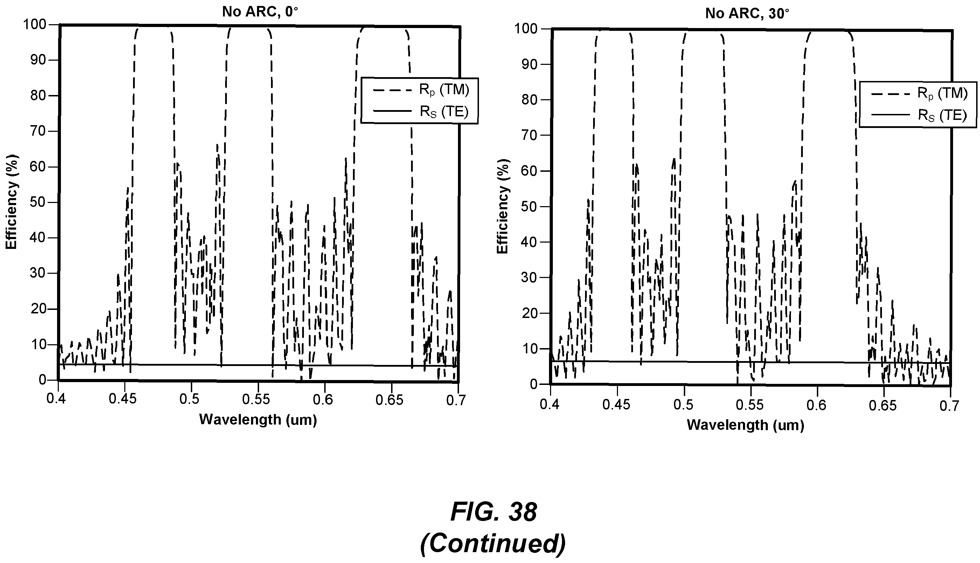

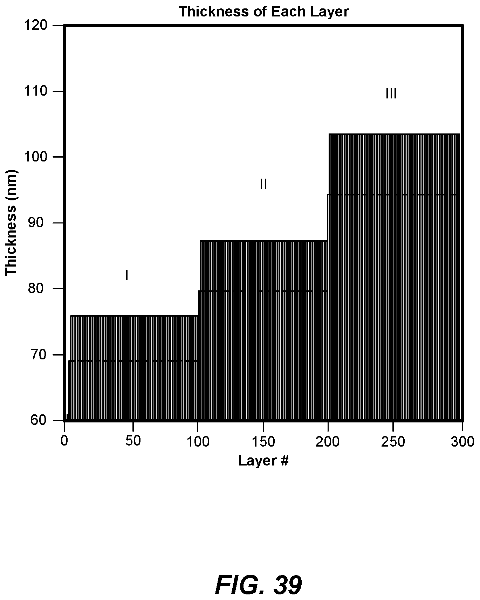

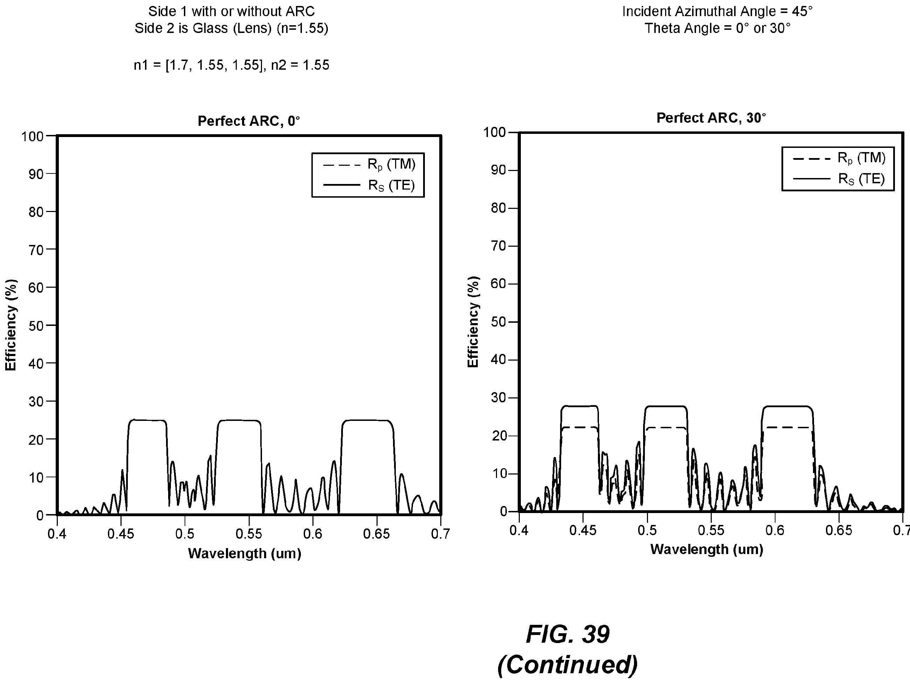

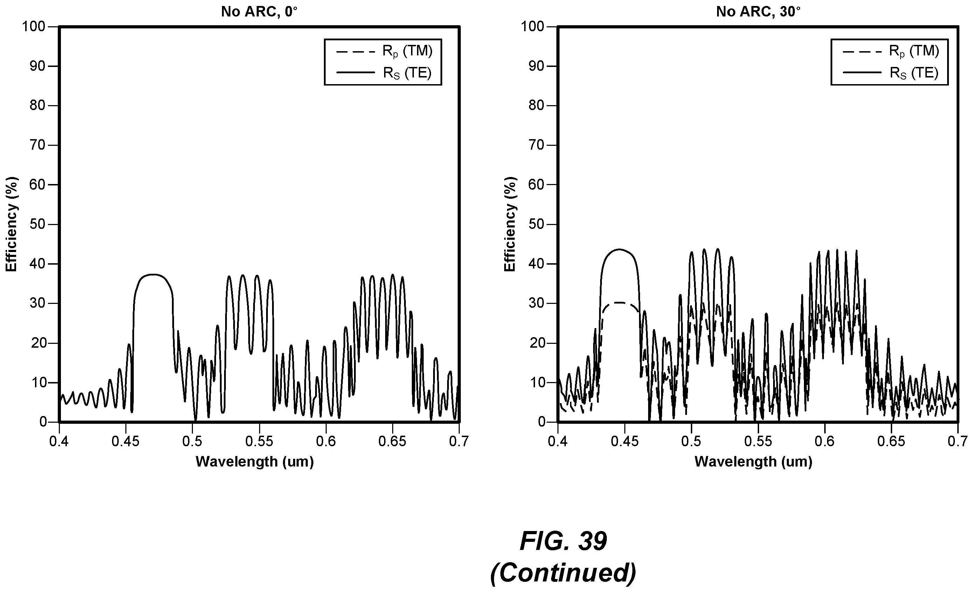

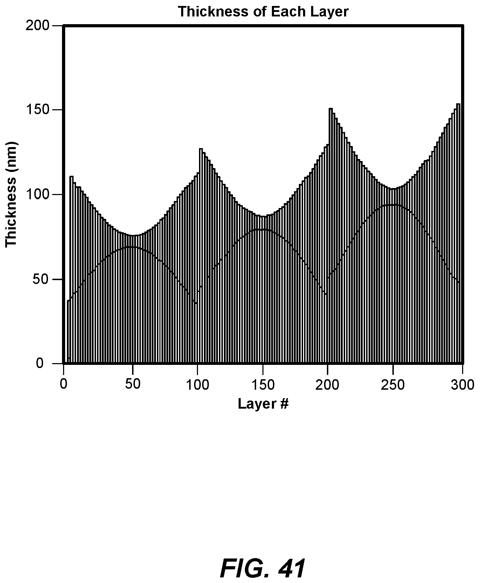

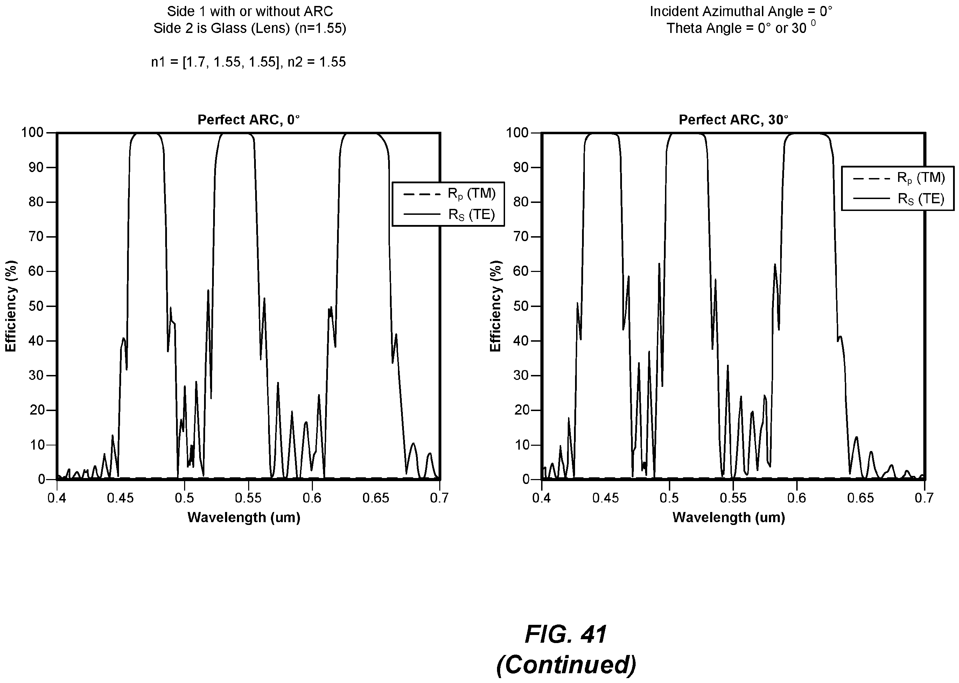

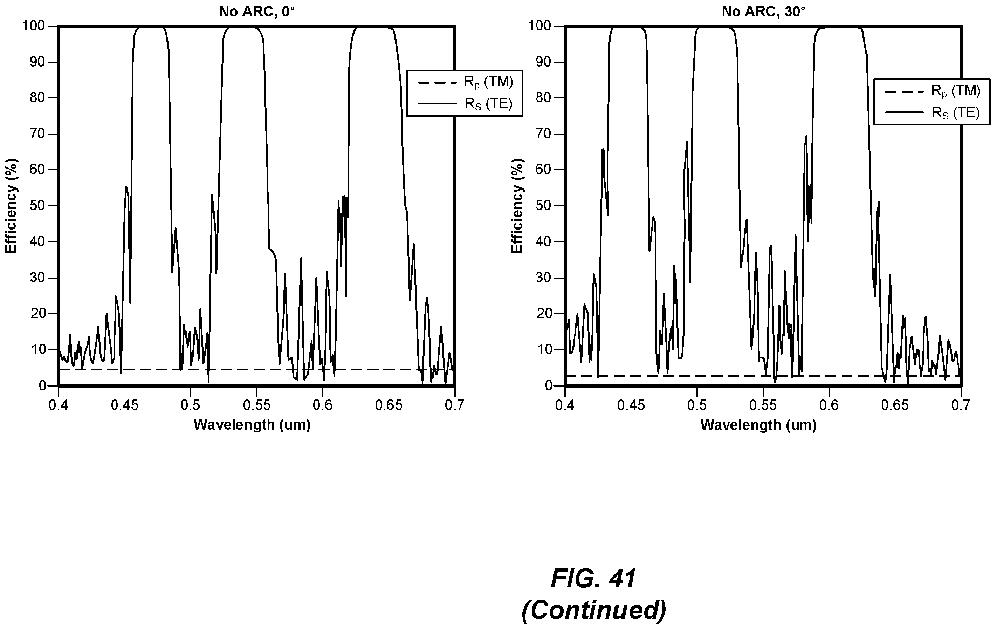

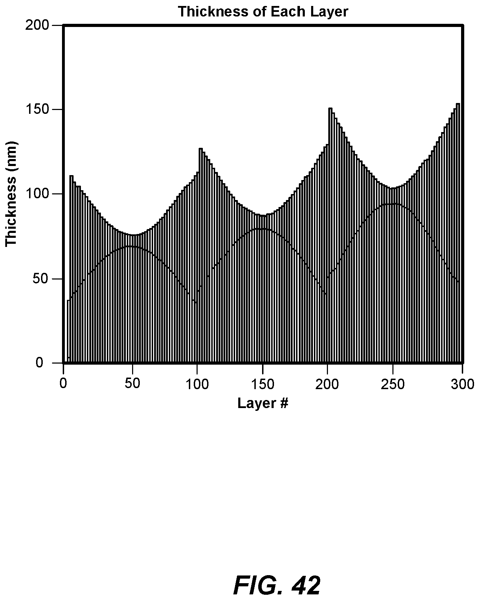

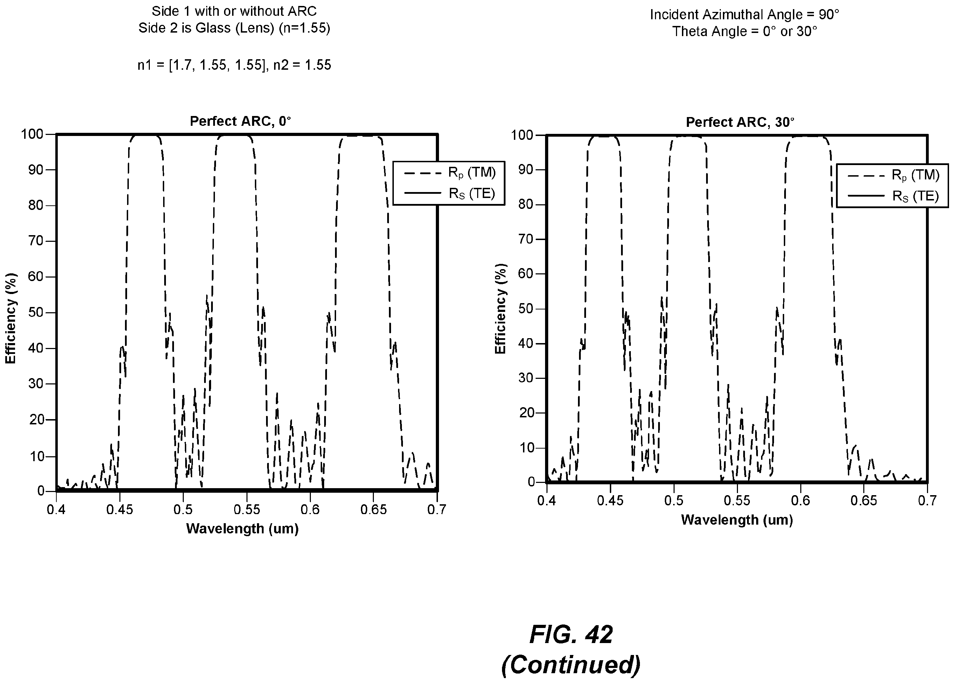

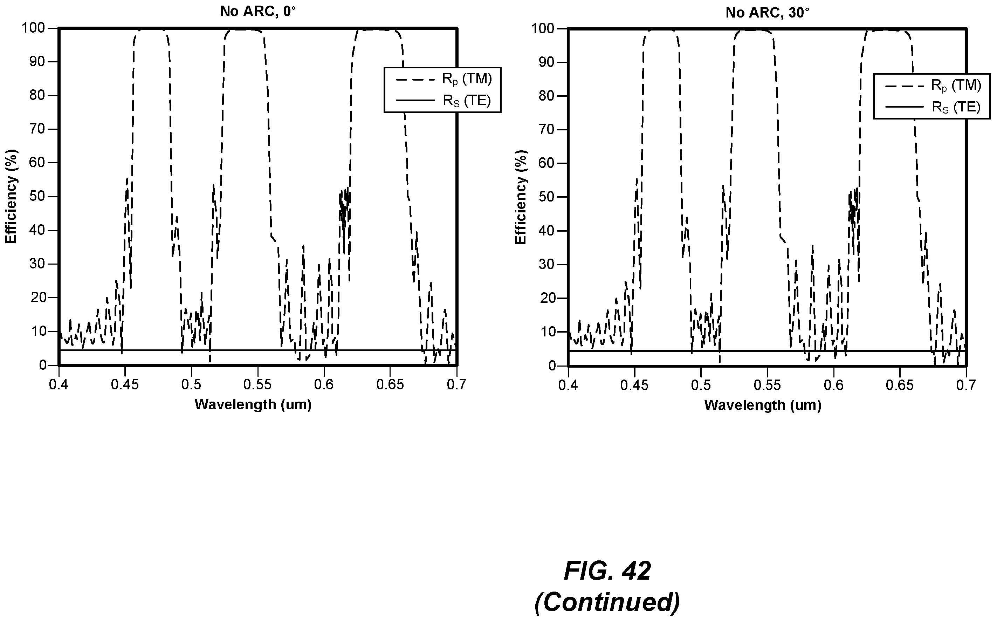

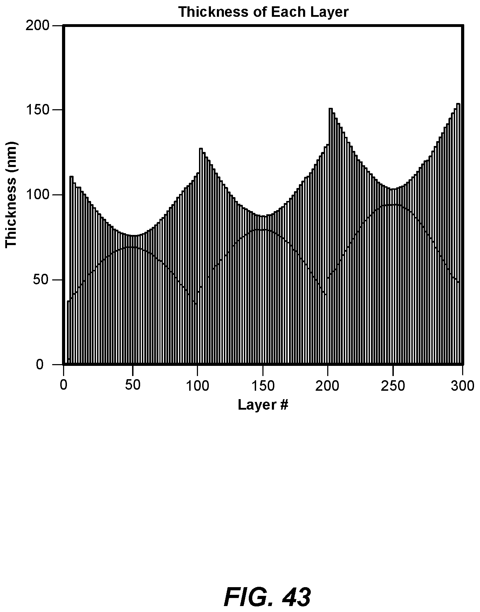

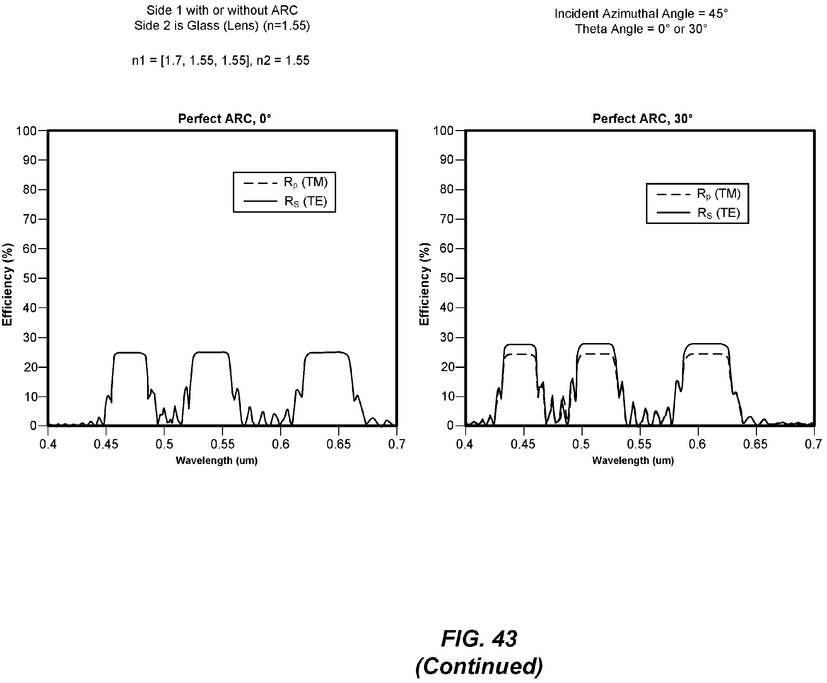

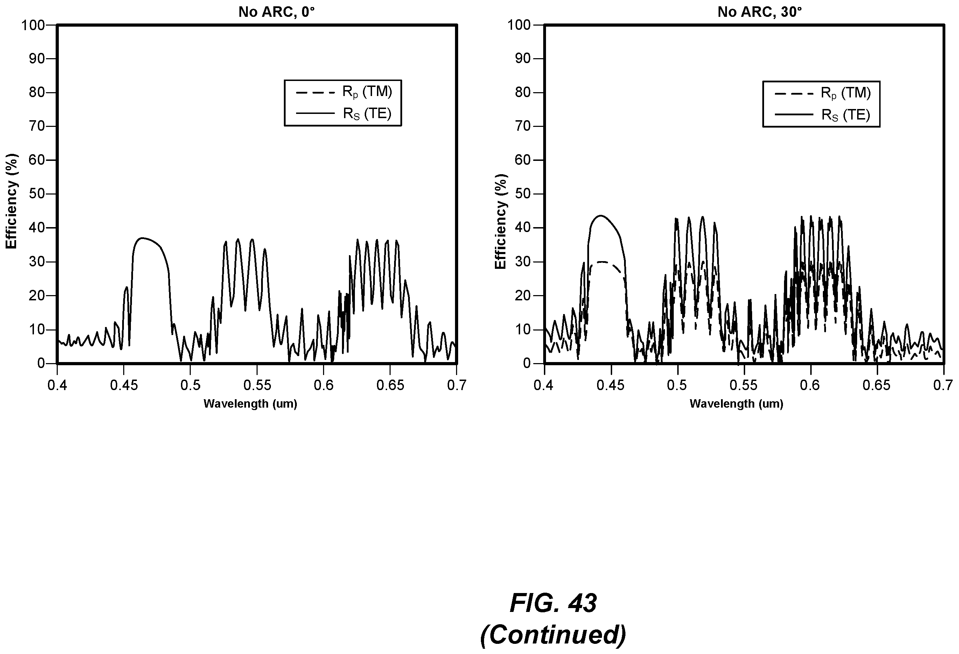

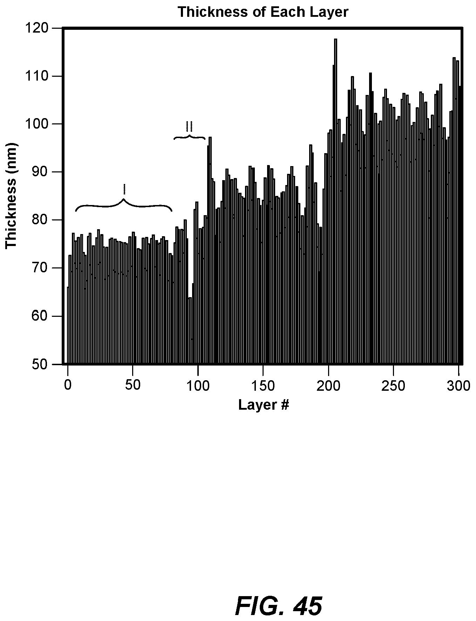

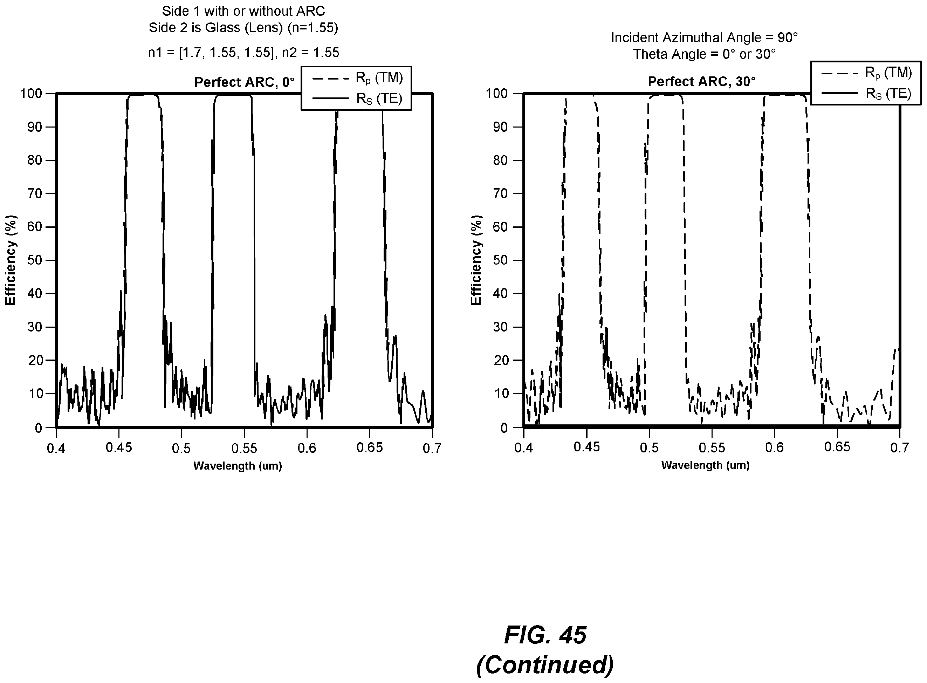

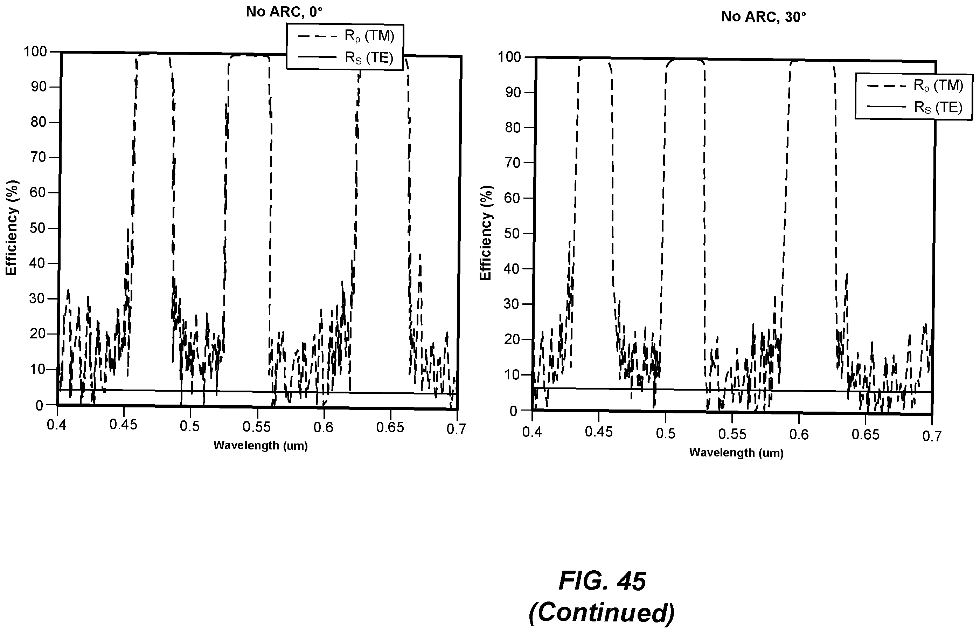

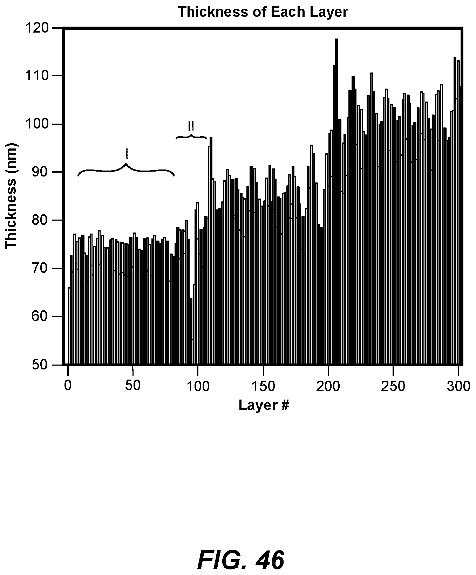

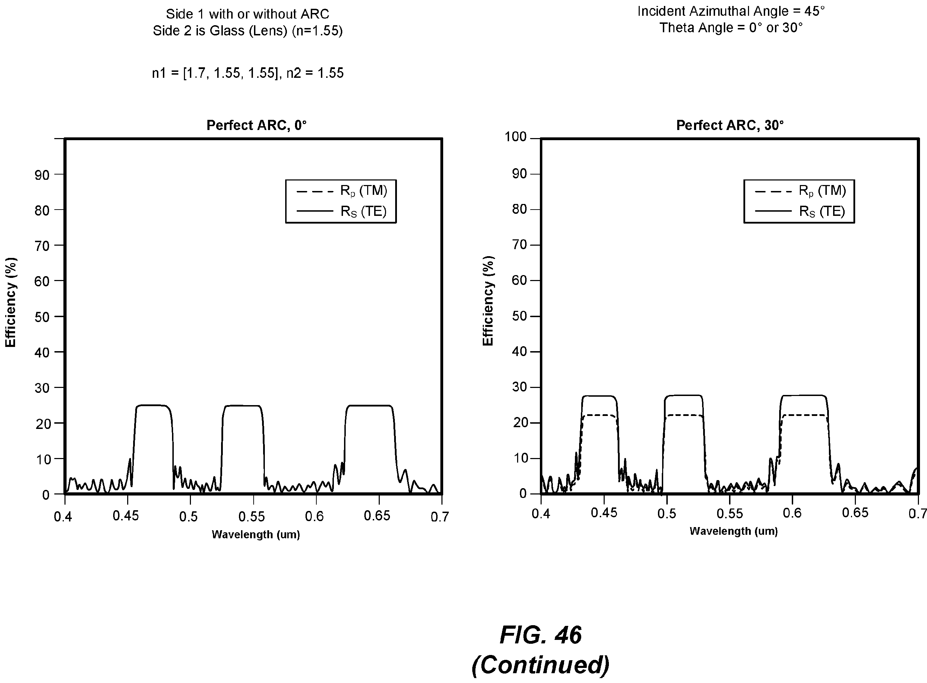

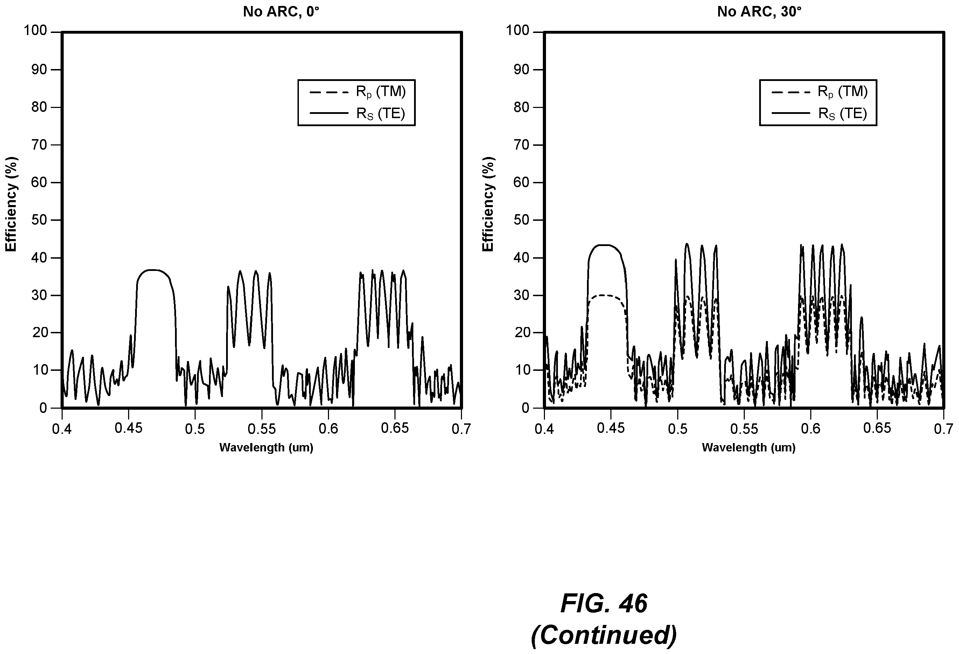

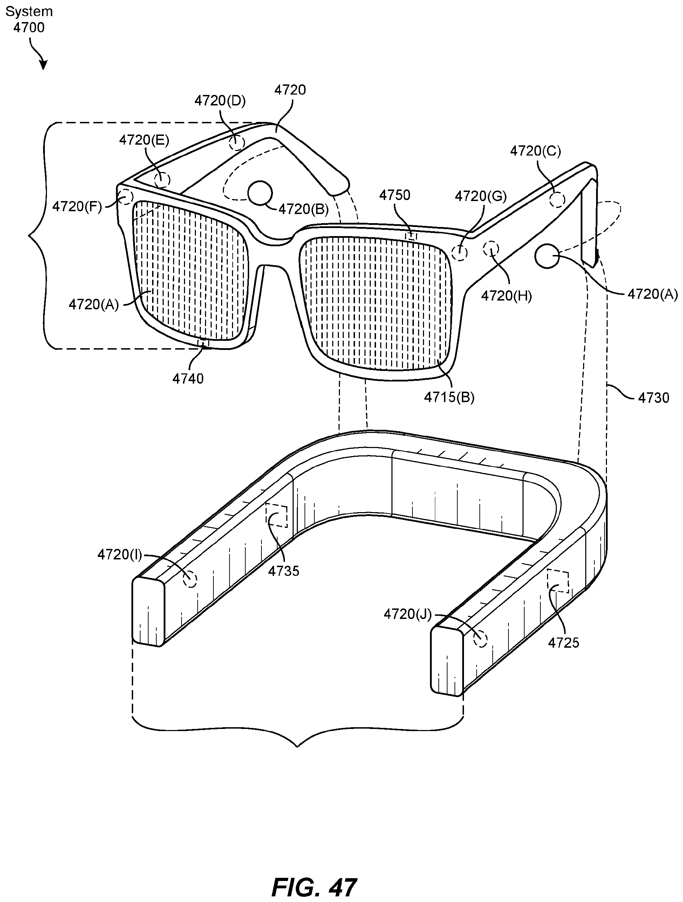

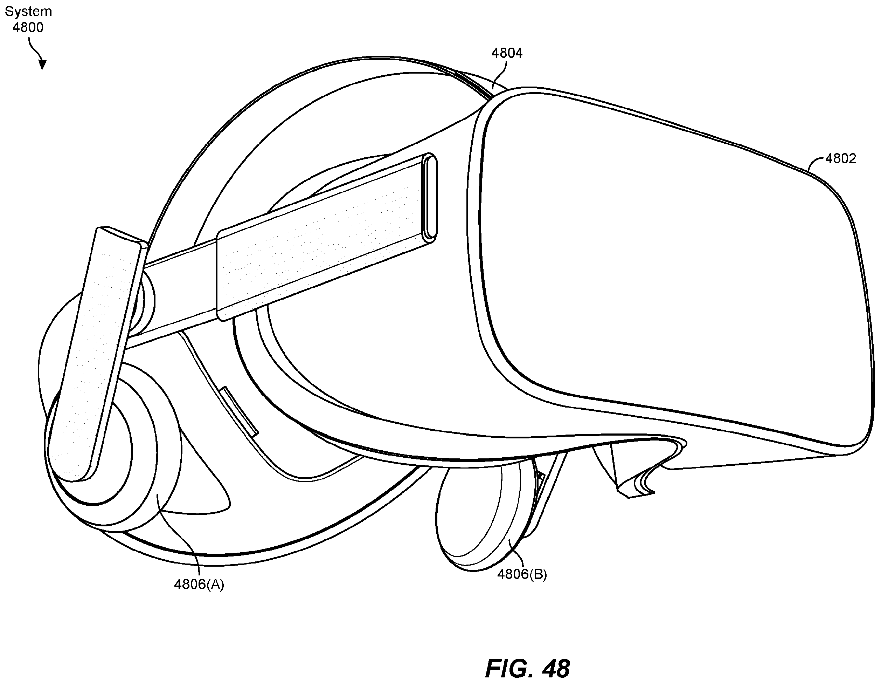

The following will provide, with reference to FIGS. 1-48, a detailed description of multilayer polymer thin films and their methods of manufacture. The discussion associated with FIGS. 1-3 relates to example notched reflective polarizer architectures. The discussion associated with FIGS. 4-7 relates to stretching and crystal alignment methods for forming optically oriented polymer layers. The discussion associated with FIGS. 8-32 relates to the structure and optical characterization of example multilayer notched reflective polarizers and notched reflectors. The discussion associated with FIGS. 33 and 34 relates to example polymer thin film precursors and additives. The discussion associated with FIG. 35 relates to a notched reflective polarizer structure including a skin layer. The discussion associated with FIGS. 36-46 includes a description of the effect of apodization on the operational efficiency of notched reflective polarizer multilayers. The discussion associated with FIGS. 47 and 48 relates to exemplary virtual reality and augmented reality devices that may include one or more multilayer polymer thin films as disclosed herein. The discussion associated with FIG. 48 includes a description of a reverse notch filter.

An example notched reflective polarizer architecture is shown schematically in FIG. 1. The reflective polarizer 100 includes a stack of alternating first and second polymer thin films 101, 102. In the illustrated embodiment, the first polymer thin films 101 may have a thickness d1 and may be optically isotropic, where n1x=n1y=n1z, and may include a first polymer composition. In certain embodiments, the first polymer thin films 101 may be characterized by refractive indices n1x < 1.8, n1y < 1.8, and n1x-n1y < 0.1. In FIG. 1, nL<nM<nH.

The second polymer thin films 102 may have a thickness d2 and may include a crystalline or semi-crystalline optically anisotropic polymer, where n2x < n2y = n2z, for example, and may include a second polymer composition. In certain embodiments, the second polymer thin films 102 may be characterized by n2y > 1.4, and | n2x - n2y | > 0.1, e.g., n2y > 1.7, and | n2x - n2y| > 0.2. In particular embodiments, a high contrast ratio may be achieved where the refractive indices for adjacent layers (e.g., first and second thin films) are equal or substantially equal along a common direction, e.g., n1x = n2x.

According to illustrative embodiments, the first polymer thin films may include one or more polymers synthesized from at least one acid monomer and at least one alcohol monomer. Example acids include naphthalene dicarboxylic acid, terephthalic acid, isophthalic acid, azelaic acid, norbornene dicarboxylic acid, and other dicarboxylic acids. Suitable acids may be polymerized with glycols including mono-ethylene glycol, diethylene glycol, propylene glycol, butylene glycol, cyclohexane dimethanol, polyethylene glycol, di-hydrogenated organic compounds and the like, as well as combinations and derivatives, including isomers and copolymers thereof.

The second polymer thin films may include polyethylene naphthalate, polyethylene terephthalate, polyethylene isophthalate, polybutylene naphthalate, polybutylene terephthalate, polyoxymethylene, as well as aliphatic or semi-aromatic polyamides. In some cases, the second polymer thin films may further include one or more oligomers as identified above. The molecular weight of the oligomer may be less than approximately 50% of the molecular weight of the polymer, e.g., less than approximately 30%, less than approximately 10%, less than approximately 5%, or less than approximately 1% of the molecular weight of the polymer.

As shown in the illustrated embodiment of FIG. 1, the first and second polymer thin films 101, 102 may have equivalent thicknesses d1, d2 throughout the multilayer stack. According to further embodiments, the film thicknesses may vary. In this regard, Applicants have shown that the output bandwidth of the notched reflective polarizer 100 may be tuned by adjusting the relative thicknesses of the first and second polymer thin films.

In an example embodiment, the thickness d1 of first polymer thin films 101 may exhibit a minimum value proximate to each outermost layer of the multilayer stack, and the thickness d1 may increase as a function of position with increasing distance from the outermost layers. A first polymer thin film 101 located proximate to the middle of the multilayer stack may have a maximum thickness, for example. The thickness d2 of second polymer thin films 102 may have a reciprocal relationship. That is, the thickness d2 of second polymer thin films 102 may exhibit a maximum value proximate to each outermost layer of the multilayer stack, and the thickness d2 may decrease as a function of position with increasing distance from the outermost layers. A second polymer thin film 102 located proximate to the middle of the multilayer stack may have a minimum thickness, for example. This thickness relationship amongst the first and second polymer thin films is shown schematically in FIG. 2.

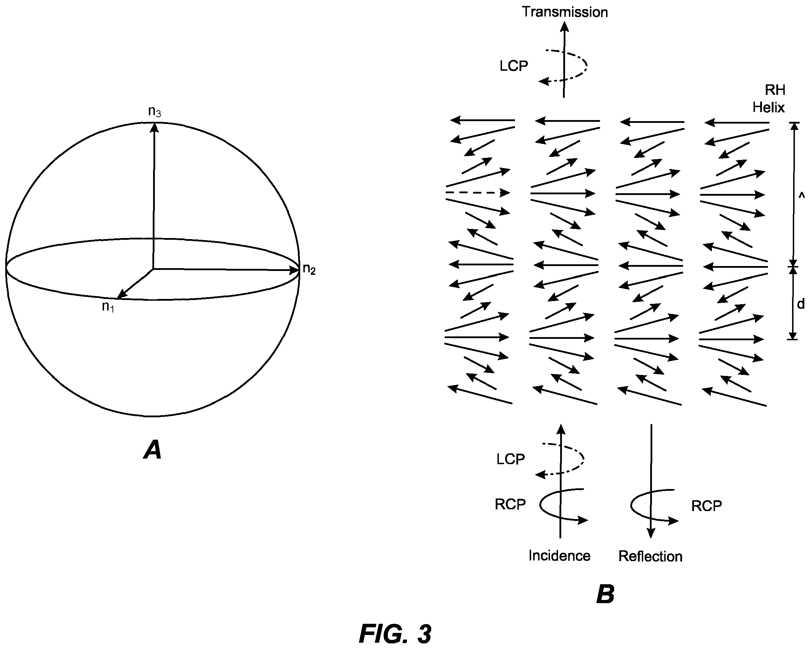

Turning to FIG. 3, shown is both the architecture and the operation of an example circular notched reflective polarizer. The circular reflective polarizer may include a multilayer liquid crystal or organic crystal thin film where each organic crystal layer in the multilayer stack includes a biaxially-oriented organic crystal material (i.e., n1≠n2≠n3), as shown schematically in FIG. 3A. The multilayer may be characterized by a period (L), which may correspond to two unit cells (2d) of index change.

In FIG. 3B, the plurality of arrows represent the orientation of a refractive index vector (e.g., n2) in each organic crystal layer of the multilayer. In the illustrated embodiment of FIG. 3B, the right-handed (RH) circular reflective polarizer transmits light having left-hand circular polarization (LCP) and reflects light having right-hand circular polarization (RCP).

As will be appreciated, although example notched filters are described herein with reference to an alternating pair of polymer layers (e.g., an ABAB... configuration of refractive index values along a chosen direction), a greater number of distinct polymer layers and further example stacking sequences may be used. Alternate stacking sequences may include ABCBCA... or ABCABC..., for example, although further stacking sequences are contemplated.

Referring to FIG. 4, shown schematically is an orthogonal consecutive stretching system 400 and a corresponding method where a polymer thin film 405 may be first stretched in the machine direction (MD) and then stretched in the transverse direction (TD). In the illustrated embodiment, polymer thin film 405 may be initially secured between opposing clip arrays 410, 420. The inter-clip spacing 415 within clip array 410 and the inter-clip spacing 425 within clip array 420 may be independently controlled. Thus, throughout a stretching process, an inter-clip spacing along different axes of orthogonal consecutive stretching system 400 may decrease, increase, or be held constant. According to various embodiments, stretching of the polymer thin film 405 in the machine direction and stretching of the polymer thin film 405 in the transverse direction may occur simultaneously and/or successively.

By way of example, and referring still to FIG. 4, polymer thin film 405 may be stretched in a first stretching step along a first axis, cooled and optionally cut to a desired width, and then stretched in a second stretching step. A temperature of the polymer thin film during the second stretching step may be at least approximately 5°C greater than a temperature of the polymer thin film during the first stretching step (e.g., approximately 5°C, approximately 10°C, approximately 15°C, or approximately 20°C greater, including ranges between any of the foregoing values).

During a second stretching step, the polymer thin film may be stretched along a second axis perpendicular to the first axis. The draw ratio during the second stretching step may be at least approximately 1.2, e.g., approximately 1.5, approximately 2, approximately 5, approximately 8, or more, including ranges between any of the foregoing values. In some embodiments, the draw ratio during the first stretching step may be less than the draw ratio during the second stretching step. By way of example, a draw ratio during the first stretching step may be less than approximately 3, or approximately 2, including ranges between any of the foregoing values. Following the second stretching step, the polymer thin film may be heated to increase its crystalline content.

Referring still to FIG. 4, heaters 430, 435 may be respectively located above and below the plane of polymer thin film 405, and may be configured to control a temperature of the polymer thin film during the acts of stretching. Heaters 430, 435 may include hot air blowers, for example. A temperature of a polymer thin film may be constant or substantially constant during one or more acts of stretching. Alternatively, a temperature of a polymer thin film may increase or decrease throughout stretching processes. Example temperatures may be greater than the polymer's glass transition temperature (Tg) but less than an onset temperature for melting (Tm).

During a first stretching process, an inter-clip spacing 450 within clip array 410 may increase, while an inter-clip spacing 445 within clip array 420 may be fixed. A tensile stress may be applied to the polymer thin film 405 along the machine direction while the polymer thin film is unstressed along the transverse direction, thus forming a uniaxially stretched polymer thin film 440. During a second and subsequent stretching process, an inter-clip spacing 455 within clip array 420 may increase, while an inter-clip spacing 460 within clip array 410 may be fixed. Thus, a tensile stress may be applied to the polymer thin film 440 along the transverse direction while the polymer thin film is unstressed along the machine direction, thus forming a processed polymer thin film 465.

According to further embodiments, a simultaneous biaxial stretch may be performed using the orientation system shown in FIG. 4. Examples of a biaxial stretch ratio include 1.2x1.5, 3x3.5, etc., which may be used to achieve a small (e.g., less than approximately 0.1) in-plane birefringence. Examples of a greater biaxial stretch ratio, such as 7x1, 10x0.7, etc. may be used to achieve a large (e.g., greater than approximately 0.1) in-plane birefringence.

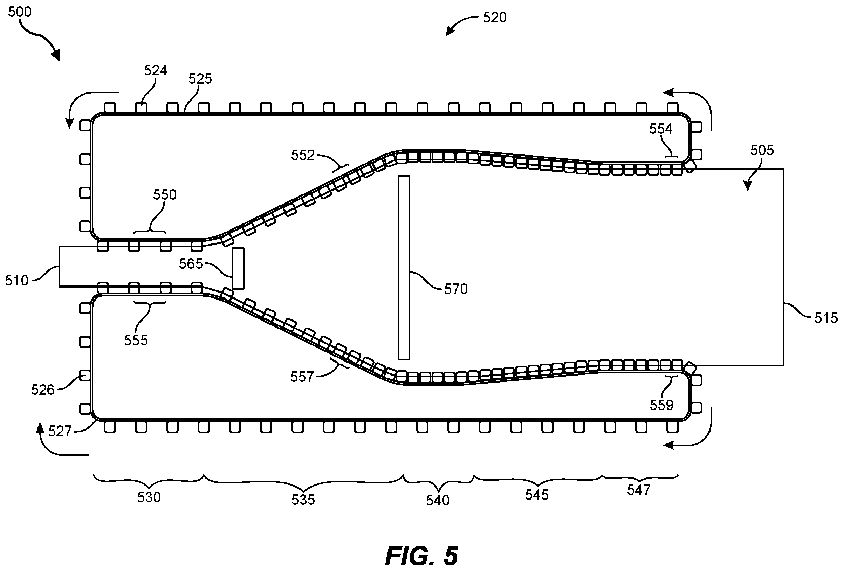

A single stage thin film orientation system for forming an optically anisotropic polymer thin film is shown schematically in FIG. 5. System 500 may include a thin film input zone 530 for receiving and pre-heating a crystallizable portion 510 of a polymer thin film 505, a thin film output zone 547 for outputting a crystallized and oriented portion 515 of the polymer thin film 505, and a clip array 520 extending between the input zone 530 and the output zone 547 that is configured to grip and guide the polymer thin film 505 through the system 500, i.e., from the input zone 530 to the output zone 547. Clip array 520 may include a plurality of movable first clips 524 that are slidably disposed on a first track 525 and a plurality of movable second clips 526 that are slidably disposed on a second track 527.

Polymer thin film 505 may include a single polymer layer or multiple (e.g., alternating) layers of first and second polymers, such as a multilayer ABAB... structure. Alternately, polymer thin film 505 may include a composite architecture having a crystallizable polymer thin film and a high Poisson's ratio polymer thin film directly overlying the crystallizable polymer thin film (not separately shown). In some embodiments, a polymer thin film composite may include a high Poisson's ratio polymer thin film reversibly laminated to, or printed on, a single crystallizable polymer thin film or a multilayer polymer thin film.

During operation, proximate to input zone 530, clips 524, 526 may be affixed to respective edge portions of polymer thin film 505, where adjacent clips located on a given track 525, 527 may be disposed at an inter-clip spacing 550, 555. For simplicity, in the illustrated view, the inter-clip spacing 550 along the first track 525 within input zone 530 may be equivalent or substantially equivalent to the inter-clip spacing 555 along the second track 527 within input zone 530. As will be appreciated, in alternate embodiments, within input zone 530, the inter-clip spacing 550 along the first track 525 may be different than the inter-clip spacing 555 along the second track 527.

In addition to input zone 530 and output zone 547, system 500 may include one or more additional zones 535, 540, 545, etc., where each of: (i) the translation rate of the polymer thin film 505, (ii) the shape of first and second tracks 525, 527, (iii) the spacing between first and second tracks 525, 527, (iv) the inter-clip spacing 550, 552, 554, 555, 557, 559, and (v) the local temperature of the polymer thin film 505, etc. may be independently controlled.

In an example process, as it is guided through system 500 by clips 524, 526, polymer thin film 505 may be heated to a selected temperature within each of zones 530, 535, 540, 545, 547. Fewer or a greater number of thermally controlled zones may be used. As illustrated, within zone 535, first and second tracks 525, 527 may diverge along a transverse direction such that polymer thin film 505 may be stretched in the transverse direction while being heated, for example, to a temperature greater than its glass transition temperature (Tg) but less than the onset of melting.

Referring still to FIG. 5, within zone 535 the spacing 552 between adjacent first clips 524 on first track 525 and the spacing 557 between adjacent second clips 526 on second track 527 may decrease relative to the inter-clip spacing 550, 555 within input zone 530. In certain embodiments, the decrease in clip spacing 552, 557 from the initial spacing 550, 555 may scale approximately as the square root of the transverse stretch ratio. The actual ratio may depend on the Poisson's ratio of the polymer thin film as well as the requirements for the stretched thin film, including flatness, thickness, etc. Accordingly, in some embodiments, the in-plane axis of the polymer thin films that is perpendicular to the stretch direction may relax by an amount equal to the square root of the stretch ratio in the stretch direction. By decreasing the clip spacings 552, 557 relative to inter-clip spacing 550, 555 the polymer thin film may be allowed to relax along the machine direction while being stretched along the transverse direction.

A temperature of the polymer thin film may be controlled within each heating zone. Withing stretching zone 535, for example, a temperature of the polymer thin film 505 may be constant or independently controlled within sub-zones 565, 570, for example. In some embodiments, the temperature of the polymer thin film 505 may be decreased as the stretched polymer thin film 505 enters zone 540. Rapidly decreasing the temperature (i.e., thermal quenching) following the act of stretching within zone 535 may enhance the conformability of the polymer thin film 505. In some embodiments, the polymer thin film 505 may be thermally stabilized, where the temperature of the polymer thin film 505 may be controlled within each of the post-stretch zones 540, 545, 547. In some embodiments, a polymer thin film may be heated within one or more post-stretch zones. Heating following an act of stretching, i.e., heat setting, may induce further crystallization of the polymer and may thermally stabilize the thin film and improve its polarization performance and conformability. A thermally-stabilized polymer thin film may be characterized by low machine direction shrinkage. For example, shrinkage along the machine direction of a heat set polymer thin film that is heated to a temperature greater the glass transition temperature of its highest Tg component (e.g., Tg+20°C or Tg+30°C) may be less than approximately 20%, e.g., less than 20, 10, 5, or 3%, including ranges between any of the foregoing values. A temperature of the polymer thin film may be controlled by forced thermal convection or by radiation, for example, IR radiation, or a combination thereof.

Downstream of stretching zone 535, according to some embodiments, a transverse distance between first track 525 and second track 527 may remain constant or, as illustrated, initially decrease (e.g., within zone 540 and zone 545) prior to assuming a constant separation distance (e.g., within output zone 547). In a related vein, the inter-clip spacing downstream of stretching zone 535 may increase or decrease relative to inter-clip spacing 552 along first track 525 and inter-clip spacing 557 along second track 527. For example, inter-clip spacing 555 along first track 525 within output zone 547 may be less than inter-clip spacing 552 within stretching zone 535, and inter-clip spacing 559 along second track 527 within output zone 547 may be less than inter-clip spacing 557 within stretching zone 535. According to some embodiments, the spacing between the clips may be controlled by modifying the local velocity of the clips on a linear stepper motor line, or by using an attachment and variable clip spacing mechanism connecting the clips to the corresponding track.

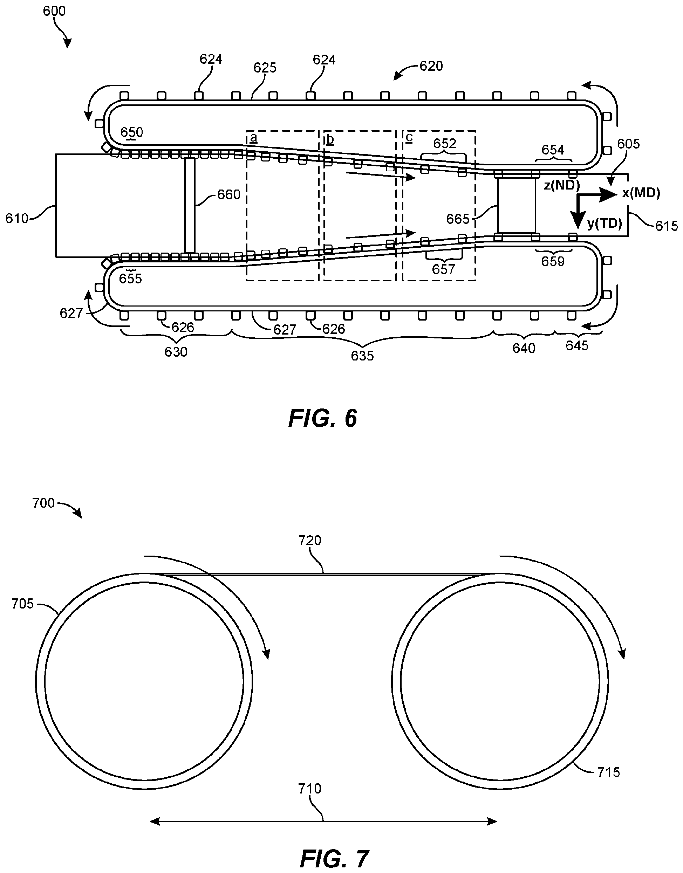

To facilitate cross-stretch relaxation while stretching in the TD direction, the inter-clip spacings 552, 557 withing stretching zone 535 may be decreased by at least approximately 10% (e.g., 10%, 20%, 30%, 40%, or 50% or more) relative to respective inter-clip spacings 550, 555 within input zone 530. The relaxation profile may be constant or variable, i.e., as a function of position, across stretching zone 535. According to some embodiments, a maximum TD draw ratio within stretching zone 535 be at least approximately 2 and less than approximately 4. The stretched and oriented polymer thin film 515 may be removed from system 500 and stretched in a further stretching step, such as via length orientation with relaxation as shown in FIG. 6.

Referring to FIG. 6, shown is a further example system for forming an anisotropic polymer thin film. Thin film orientation system 600 may include a thin film input zone 630 for receiving and pre-heating a crystalline or crystallizable portion 610 of a polymer thin film 605, a thin film output zone 645 for outputting an at least partially crystallized and oriented portion 615 of the polymer thin film 605, and a clip array 620 extending between the input zone 630 and the output zone 645 that is configured to grip and guide the polymer thin film 605 through the system 600. As in the previous embodiment, clip array 620 may include a plurality of first clips 624 that are slidably disposed on a first track 625 and a plurality of second clips 626 that are slidably disposed on a second track 627. In certain embodiments, crystalline or crystallizable portion 610 may correspond to stretched and oriented polymer thin film 615.

In an example process, proximate to input zone 630, first and second clips 624, 626 may be affixed to edge portions of polymer thin film 605, where adjacent clips located on a given track 625, 627 may be disposed at an initial inter-clip spacing 650, 655, which may be substantially constant or variable along both tracks within input zone 630. Within input zone 630 a distance along the transverse direction between first track 625 and second track 627 may be constant or substantially constant.

System 600 may additionally include one or more zones 635, 640, etc. The dynamics of system 600 allow independent control over: (i) the translation rate of the polymer thin film 605, (ii) the shape of first and second tracks 625, 627, (iii) the spacing between first and second tracks 625, 627 along the transverse direction, (iv) the inter-clip spacing 650, 655 within input zone 630 as well as downstream of the input zone (e.g., inter-clip spacings 652, 654, 657, 659), and (v) the local temperature of the polymer thin film, etc.

In an example process, as it is guided through system 600 by clips 624, 626, polymer thin film 605 may be heated to a selected temperature within each of zones 630, 635, 640, 645. A temperature greater than the glass transition temperature of a component of the polymer thin film 605 may be used during deformation (i.e., within zone 635), whereas a lesser temperature, an equivalent temperature, or a greater temperature may be used within each of one or more downstream zones.

As in the previous embodiment, the temperature of the polymer thin film 605 within stretching zone 635 may be locally controlled. According to some embodiments, the temperature of the polymer thin film 605 may be maintained at a constant or substantially constant value during the act of stretching. According to further embodiments, the temperature of the polymer thin film 605 may be incrementally increased within stretching zone 635. That is, the temperature of the polymer thin film 605 may be increased within stretching zone 635 as it advances along the machine direction. By way of example, the temperature of the polymer thin film 605 within stretching zone 635 may be locally controlled within each of heating zones a, b, and c.

The temperature profile may be continuous, discontinuous, or combinations thereof. As illustrated in FIG. 6, heating zones a, b, and c may extend across the width of the polymer thin film 605, and the temperature within each zone may be independently controlled according to the relationship Tg < Ta < Tb < Tc < Tm. A temperature difference between neighboring heating zones may be less than approximately 20°C, e.g., less than approximately 10°C, or less than approximately 5°C.

Referring still to FIG. 6, within zone 635 the spacing 652 between adjacent first clips 624 on first track 625 and the spacing 657 between adjacent second clips 626 on second track 627 may increase relative to respective inter-clip spacings 650, 655 within input zone 630, which may apply an in-plane tensile stress to the polymer thin film 605 and stretch the polymer thin film along the machine direction. Moreover, the extent of inter-clip spacing on one or both tracks 625, 627 within deformation zone 635 may be constant or variable and, for example, increase as a function of position along the machine direction.

Within stretching zone 635, the inner-clip spacings 652, 657 may increase linearly such that the primary mode of deformation may be at constant velocity. For example, a strain rate of the polymer thin film may decrease along the machine direction. In further embodiments, the polymer thin film 605 may be stretched at a constant strain-rate where the inter-clip spacing may increase exponentially.

In certain examples, a progressively decreasing strain rate may be implemented with thin film orientation system 600 to generate a high refractive index polymer thin film. For instance, within stretching zone 635 an inter-clip spacing may be configured such that a distance between each successive pair of clips 624, 626 increases along the machine direction. The inter-clip spacing between each successive pair of clips may be independently controlled to achieve a desired strain rate along the machine direction.

In response to the tensile stress applied along the machine direction, system 600 is configured to inhibit the generation of stresses and an attendant realignment of crystals along the machine direction. As illustrated, within zone 635, first and second tracks 625, 627 may converge along a transverse direction such that polymer thin film 605 may relax in the transverse direction while being stretched in the machine direction. In some embodiments, a compressive force may be applied in the transverse direction. Using a single stretching step or multiple stretching steps, polymer thin film 605 may be stretched by a factor of at least approximately 1.2, (e.g., 1.2, 1.5, 2, 4, 5, 6, 7, 8, 9, 10, 20, 40, 100, or more, including ranges between any of the foregoing values).

Within stretching zone 635, an angle of inclination of first and second tracks 625, 627 (i.e., with respect to the machine direction) may be constant or variable. In particular examples, the inclination angle within stretching zone 635 may decrease along the machine direction. That is, according to certain embodiments, the inclination angle within heating zone a may be greater than the inclination angle within heating zone b, and the inclination angle within heating zone b may be greater than the inclination angle within heating zone c. Such a configuration may be used to provide a progressive decrease in the relaxation rate (along the transverse direction) within the stretching zone 635 as the polymer thin film advances through system 600.

In some embodiments, the temperature of the polymer thin film 605 may be decreased as the stretched polymer thin film 605 exits zone 635. In some embodiments, the polymer thin film 605 may be thermally stabilized, where the temperature of the polymer thin film 605 may be controlled within each of the post-deformation zones 640, 645. A temperature of the polymer thin film may be controlled by forced thermal convection or by radiation, for example, IR radiation, or a combination thereof.

Downstream of deformation zone 635, the inter-clip spacing may increase or remain substantially constant relative to inter-clip spacing 652 along first track 625 and inter-clip spacing 657 along second track 627. For example, inter-clip spacing 655 along first track 625 within output zone 645 may be substantially equal to the inter-clip spacing 652 as the clips exit zone 635, and inter-clip spacing 659 along second track 627 within output zone 645 may be substantially equal to the inter-clip spacing 657 as the clips exit zone 635. Following the act of stretching, polymer thin film 605 may be annealed, for example, within one or more downstream zones 640, 645.

The strain impact of the thin film orientation system 600 is shown schematically by unit segments 660, 665, which respectively illustrate pre- and post-deformation dimensions for a selected area of polymer thin film 605. In the illustrated embodiment, polymer thin film 605 has a pre-stretch width (e.g., along the transverse direction) and a pre-stretch length (e.g., along the machine direction). As will be appreciated, a post-stretch width may be less than the pre-stretch width and a post-stretch length may be greater than the pre-stretch length.

In some embodiments, a roll-to-roll system may be integrated with a thin film orientation system, such as thin film orientation system 500 or thin film orientation system 600, to manipulate a polymer thin film. In further embodiments, as illustrated herein with reference FIG. 7, a roll-to-roll system may itself be configured as a thin film orientation system.

An example roll-to-roll polymer thin film orientation system is depicted in FIG. 7. In conjunction with system 700, a method for stretching a polymer thin film 720 may include mounting the polymer thin film between linear rollers 705, 715 and heating a portion of the polymer thin film located between the rollers 705, 715 to a temperature greater than its glass transition temperature. Rollers 705, 715 may be arranged with a controllable spacing 710 therebetween. A heat source (not shown), such as an IR source optionally equipped with an IR reflector, may be used to heat the polymer thin film 720 within a deformation region between the rollers.

While controlling the temperature of the polymer thin film, rollers 705, 715 may be engaged and the polymer thin film may be stretched. For instance, first roller 705 may rotate at a first rate and second roller 715 may rotate at a second rate greater than the first rate to stretch the polymer thin film along a machine direction therebetween. Within a deformation zone between rollers, system 700 may be configured to locally control the temperature and the strain rate of the polymer thin film. In some examples, as the polymer thin film advances from roller 705 to roller 715, a temperature of the polymer thin film may increase, and a strain rate of the polymer thin film may decrease. Downstream of roller 715, the polymer thin film may then be cooled while maintaining the applied stress. System 700 may be used to form a uniaxially oriented polymer thin film. Additional rollers may be added to system 700 to control the conveyance and take-up of the polymer thin film.

Example processes may be integrated with a real-time feedback loop that is configured to assess one or more attributes of the organic crystal thin film and accordingly adjust one or more process variables. Resultant organic solid structures may be incorporated into optical elements such as AR/VR headsets and other devices, e.g., waveguides, prisms, Fresnel lenses, and the like.

Referring now to FIG. 8, shown is a plot of the reflection efficiency for a single band notched reflective polarizer that is configured to reflect light within a defined band (~470-485 nm) having a desired polarization (e.g., the transverse magnetic (TM), or p-polarized light) and transmit light with an undesired polarization (e.g., the transverse electric (TE), or s-polarized light).

Referring to FIG. 9, shown is a plot of the reflection efficiency for a multi-band notched reflective polarizer that is configured to reflect p-polarized light within three discrete bands and transmit s-polarized light.

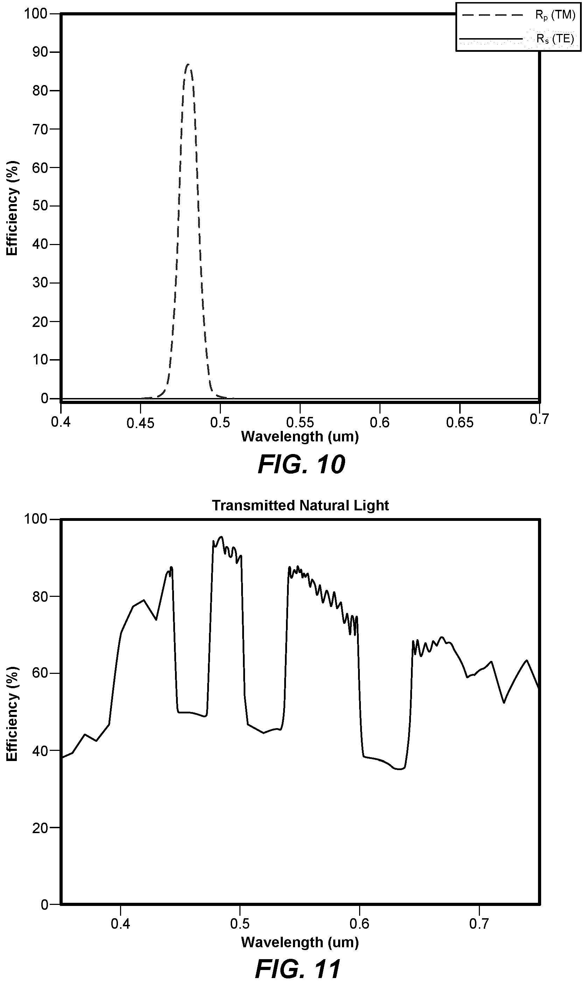

Turning to FIG. 10, shown is a plot of the reflection efficiency for a single band notched reflective polarizer that is configured to reflect p-polarized light within a defined band and transmit s-polarized light. In the illustrated embodiment, the reflection efficiency is less than 100%. For instance, the maximum reflection efficiency within a given band may range from approximately 20% to approximately 100%, e.g., 20, 30, 40, 50, 60, 70, 80, 90, or 100%, including ranges between any of the foregoing values.

As will be appreciated with reference to FIGS. 8-10, the reflective band edge may be abrupt or diffuse. In some cases, the shape of the band may be symmetric or asymmetric. In some embodiments, the reflection efficiency of light having the desired polarization state (i.e., within a reflection band) may be tuned over the range of approximately 0 to 100%, whereas the transmission efficiency of light outside of the reflection band, or having an undesired polarization state, may be at least approximately 80%.

Referring to FIG. 11, shown is a plot of the transmission efficiency of light spectrum through an example notched reflective polarizer. In contrast to a full spectrum reflector, in the embodiment of FIG. 11, the notched reflective polarizer is configured to pass approximately 64% of the incident light, which may appreciably increase the transparency of the reflector and contribute to improved performance and user acceptance of an associated AR or VR system. Light may be directed at a major surface of a notched reflective polarizer at an angle of incidence of from approximately 0° to 60°.

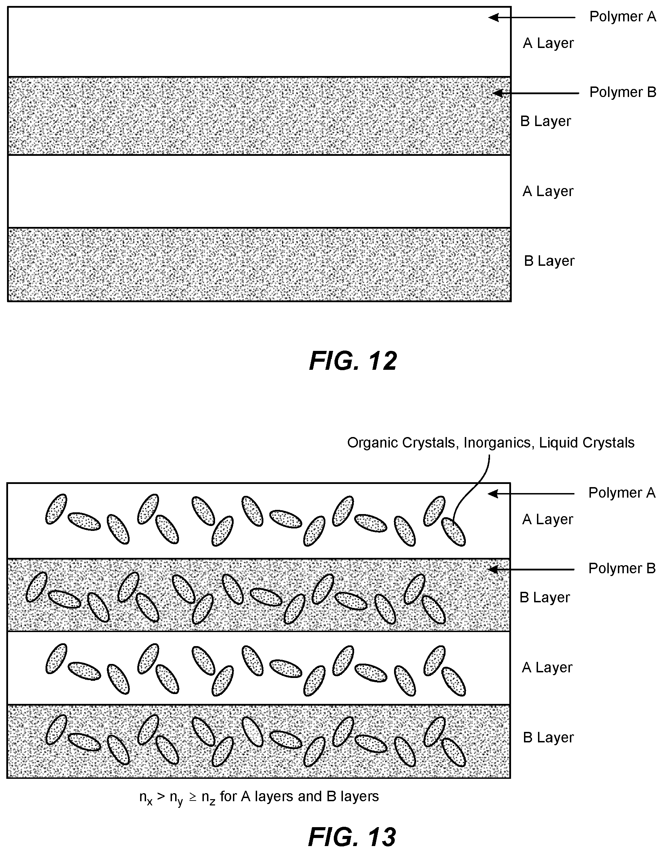

Example multilayer notched reflective polarizer architectures are shown in FIGS. 12-15. The illustrated structures each include a stacked configuration of alternating A and B layers. Optionally, the A layers may include an A polymer and the B layers may include a B polymer where the A and B polymer layers may independently include an oriented or random distribution of a second phase, such as inorganic particles or particles of an organic or liquid crystal material having a desired composition, size, size distribution, shape, loading, etc.

Applicants have developed a number of approaches for manufacturing high average refractive index (N > 1.6) polymer layers having a small in-plane birefringence. In some embodiments, a high refractive index atom may be incorporated into the polymer backbone or polymer side chain. Example high refractive index atoms include N, O, S, Cl, and Br. Such a polymer material may be oriented uniaxially or biaxially through a suitable stretching process.

According to further embodiments, high average refractive index polymer materials may include a high refractive index (e.g., n>2) organic additive, such as particles, needles, or nanoscale crystals. Such a modified polymer material may be oriented uniaxially or biaxially through a suitable stretching process.

According to still further embodiments, in a multilayer architecture, one of the polymer layers may be formed from or include a liquid crystal, organic crystal, or liquid crystal polymer. The liquid crystal, organic crystal, or liquid crystal polymer may be characterized by nz>nx and nz>ny.

Referring to FIG. 12, a multilayer reflective polarizer includes an ABAB stacked architecture of A and B polymers. Each polymer layer may include a composition made up of a single phase.

Referring to FIG. 13, a multilayer reflective polarizer includes an ABAB stacked architecture of A and B polymers where each polymer layer includes embedded particles of an unoriented second phase. The polymer layers and embedded particles may be configured such that nx > ny ≥ nz for both the A layers and the B layers.

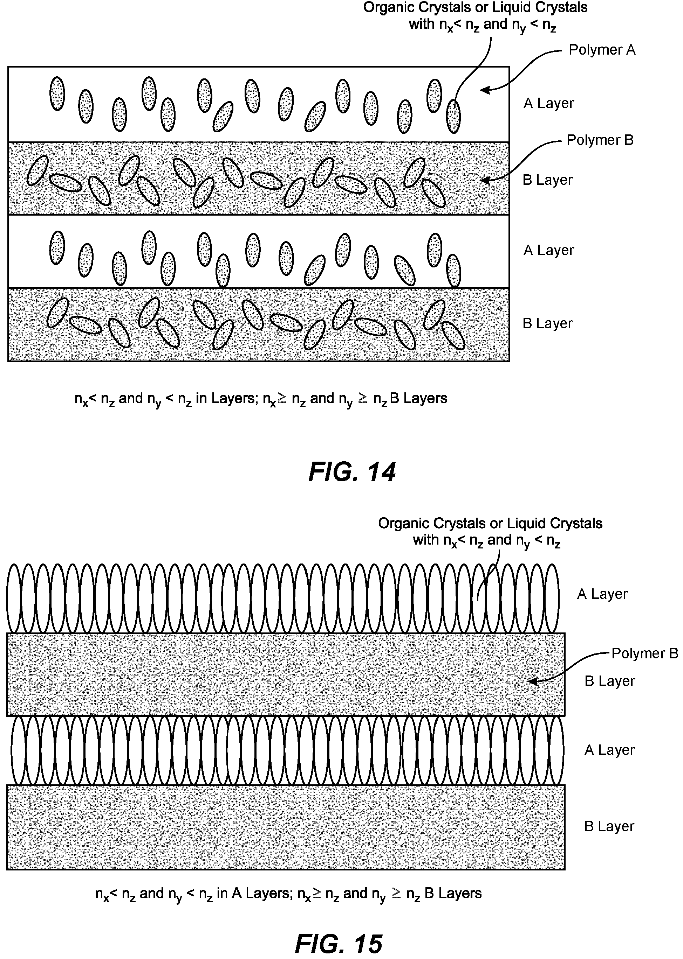

Referring to FIG. 14, a multilayer reflective polarizer includes an ABAB stacked architecture of A and B polymers where the A layers include embedded particles of an oriented second phase and the B layers include embedded particles of an unoriented second phase. The polymer layers and embedded particles may be configured such that nx < nz and ny < nz for the A layers and for the B layers nx ≥ nz and ny ≥ nz. That is, within the A layers, the oriented particles may be arranged such that nx < nz and ny < nz for the particles themselves.

The multilayer reflective polarizer architecture shown in FIG. 15 includes A layers of oriented organic or liquid crystal material and B layers of a suitable optical polymer. The oriented crystals and the polymer layers may be configured such that nx < nz and ny < nz for the A layers and nx ≥ nz and ny ≥ nz for the B layers.

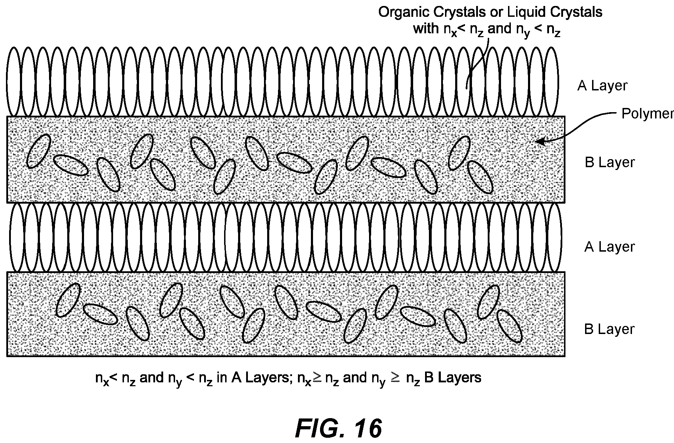

The multilayer reflective polarizer architecture shown in FIG. 16 includes A layers of oriented organic or liquid crystal material and B layers of a suitable optical polymer where the B layers include embedded particles of an unoriented second phase. The oriented crystals and the crystal-modified polymer layers may be configured such that nx < nz and ny < nz for the A layers and nx ≥ nz and ny ≥ nz for the B layers.

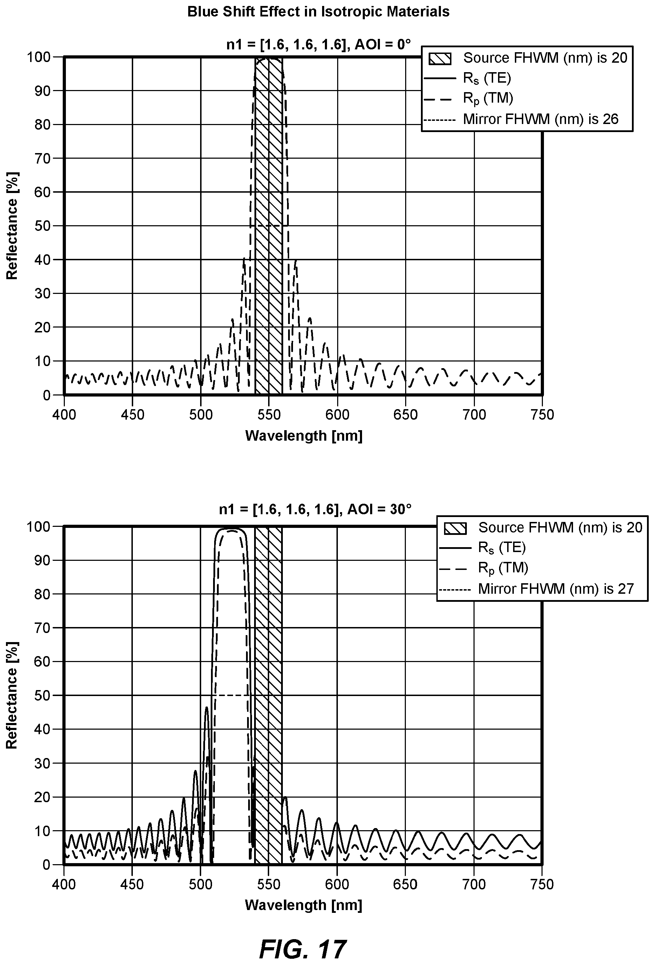

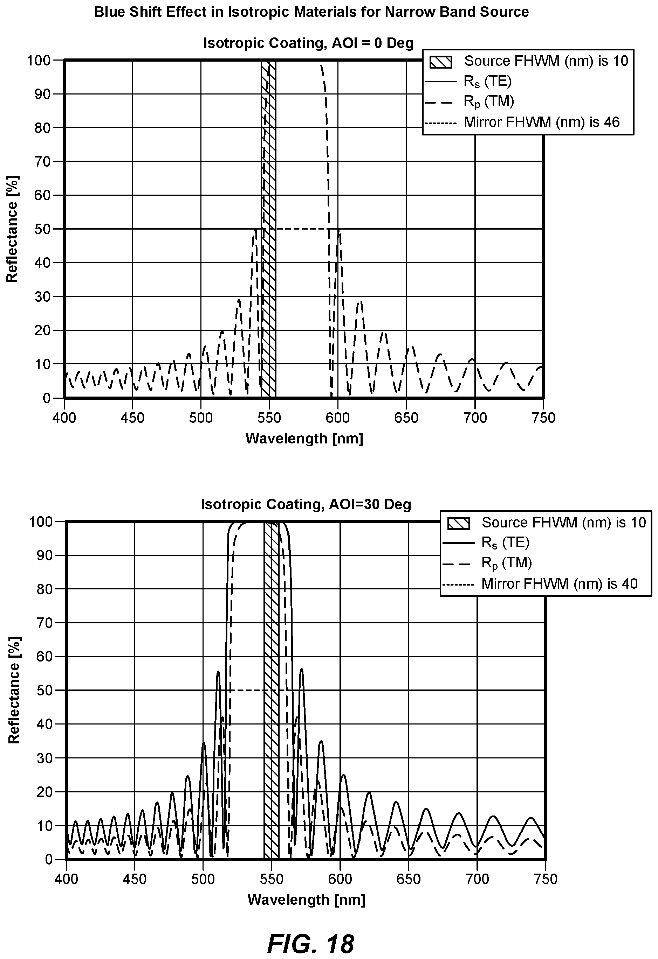

The influence of the angle of incidence (AOI) on the blue shift of reflected light for an optically isotropic material (nx = ny = nz = 1.60) is shown in FIGS. 17 and 18 for broader and narrower band sources, respectively. Referring initially to FIG. 17, whereas the reflectance band is well-aligned with the source band at normal incidence, a band shift relocates the dispersion center outside of the spectral band for the source for both s and p polarizations at an angle of incidence of 30°. Turning to FIG. 18, notwithstanding the blue shift effect, the narrower source band is observed to remain within the reflectance bands for both 0° and 30° incident light.

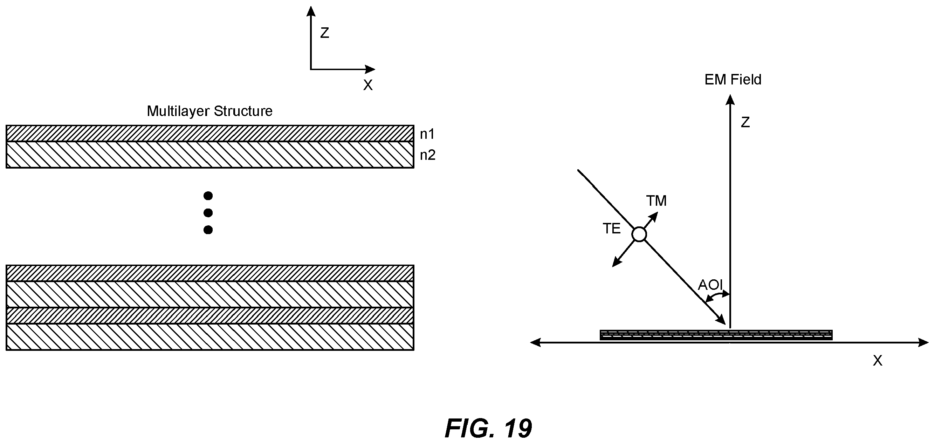

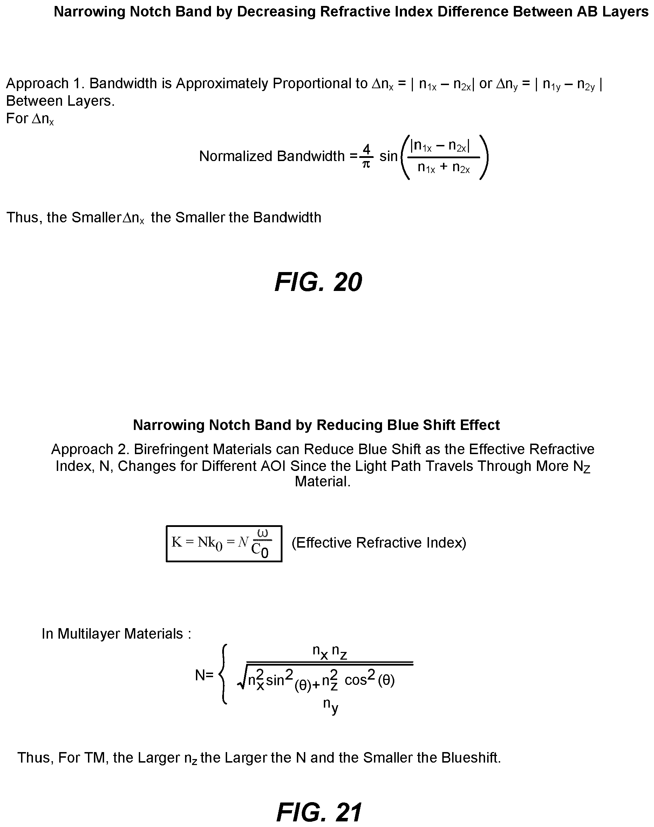

Referring to FIG. 19, Applicants have shown that a narrow band notched filter may include plural layers of an optically anisotropic material that are arranged in a multilayer structure. Moreover, in such a layered notched filter, a decreased blue shift effect may be realized by utilizing one or more of (a) decreasing the intralayer in-plane birefringence, (b) increasing the out-of-plane refractive index, and (c) increasing the overall refractive index of the individual layers within the multilayer. These effects are illustrated schematically in FIGS. 20-22.

In some embodiments, a multilayer notched filter exhibiting low band shift may be configured with alternating layers of anisotropic (n1x>n1y) and isotropic (n2x=n2y) polymer materials. Less phase shift may be attributed to a higher average refractive index in the multilayer, such as when the refractive indices of the isotropic layers are matched to the extraordinary refractive index of the anisotropic layers (i.e., n2x=n2y=n1x).

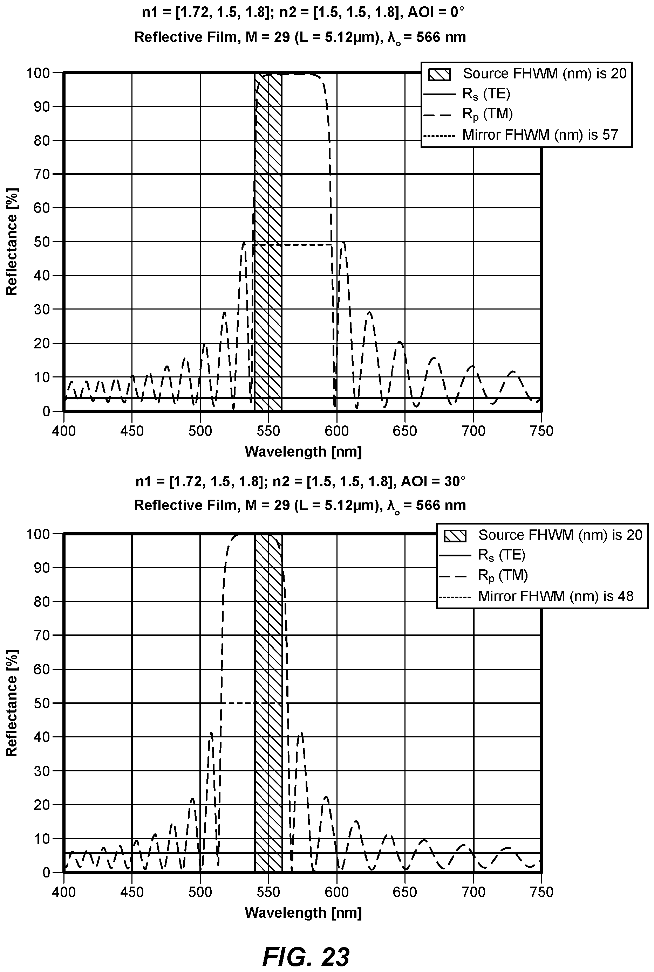

The influence of the angle of incidence (AOI) on the blue shift of reflected light for optically anisotropic multilayer structures is shown in FIGS. 23-32 for both broader and narrower band sources. Notwithstanding the blue shift effect, in each illustrated example, the source bands for are observed to remain within the dispersion bands for both 0° and 30° incident light.

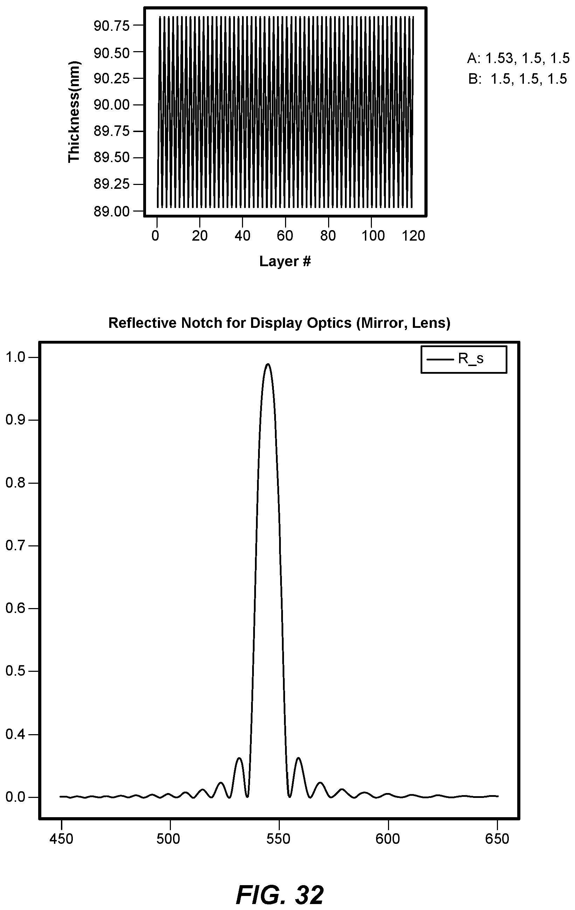

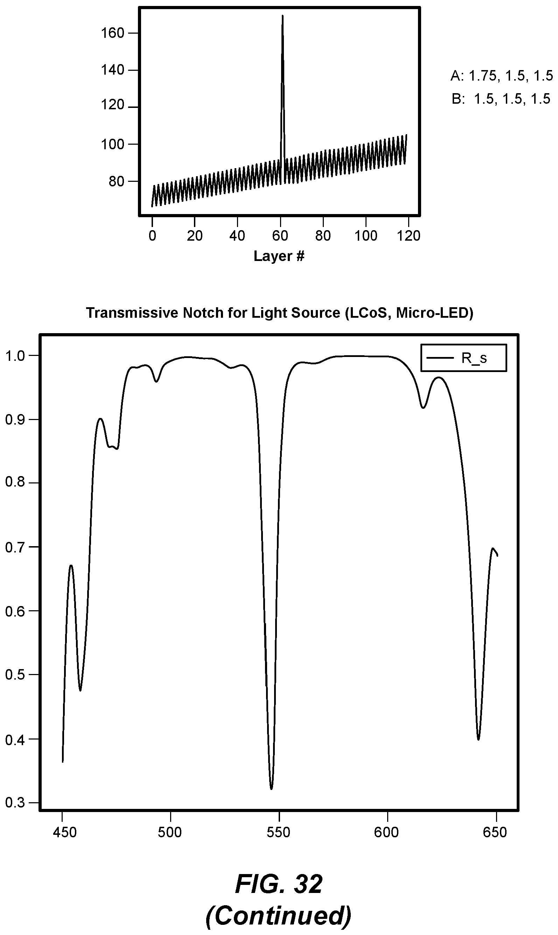

Referring to FIG. 32, shown are plots of reflectance versus wavelength for a pair of notch filters illuminated with s-polarized light. The performance of a multilayer reflective polarizer is shown in FIG. 32A and the performance of a complementary (transmissive) multilayer polarizer is shown in FIG. 32B. In the illustrated examples, the A layers include an anisotropic optical medium (e.g., nx = 1.53, ny = nz = 1.5) whereas the B layers include an isotropic optical medium (nx = ny = nz = 1.5). Corresponding thickness profiles for each multilayer are also shown.

With reference initially to the reflective polarizer of FIG. 32A, as shown in the inset, the ABAB structure may include alternating A and B layers where the A layers each have an equivalent or substantially equivalent thickness and the B layers each have an equivalent or substantially equivalent thickness.

Turning to FIG. 32B, the ABAB multilayer structure includes both a thickness gradient across the ABAB stack and an intentional thickness anomaly for one layer within the stack. That is, the thickness of successive layers within the stack may increase monotonically across a multilayer having dozens or hundreds of individual A and B layers. In addition, a single one of the A layers (or a single one of the B layers) may have an incongruous thickness that is approximately twice the thickness of adjacent layers. The incongruous layer thickness may be selected to avoid reflection by the multilayer at a particular wavelength and accordingly form a narrow transmissive notch filter.

A notch filter that is immune to the unwanted leakage due to blue shift effects may be formed by combining the structure of FIG. 32A with the structure of FIG. 32B. For such a paired (2 part) notch filter, the reflective component may be integrated with display optics, such as a mirror or a lens, and the transmissive component may be integrated with a light source, such as an LCoS projector or an LED projector.

Referring to FIG. 33, shown are example small molecules suitable for forming an optically anisotropic polymer thin film. These and other molecules may be polymerized and formed into a thin film or incorporated into a polymer thin film as an additive. A polymer melt, for instance, may include from approximately 5 to 80 wt.% of an additive. During an act of stretching a polymer thin film formed from such a melt, an additive may form oriented crystals within the thin film, as depicted in FIGS. 12 and 13. An additive may be incorporated into one or both of the A layer and the B layer of a multilayer structure. Amongst A and B layers, the additive composition and content may be the same or different.

According to further embodiments, the molecules shown in FIG. 34 may form an organic crystallite layer that may be disposed and oriented between polymer layers in a multilayer reflective polarizer, such as the A layers in FIGS. 14 and 15. Still further example additives may include particles or fibers of an inorganic compound, such as SiO2, TiO2, or ZrO2 nanoparticles.

Referring to FIG. 34, shown are example liquid crystal structures that may be incorporated into an optically anisotropic polymer thin film according to certain embodiments. Exemplary liquid crystals may form a strong dipole moment in response to an applied electric or magnetic field and may be mixed with low viscosity reactive monomers, such as acrylates, methacrylates, epoxies, and thiol-enes. A polymer layer may include from approximately 20 to 95 wt.% of a liquid crystal additive. The application of an electric or magnetic field may align liquid crystals within a polymer thin film. In certain embodiments, a high refractive index direction of the liquid crystals may be oriented out of plane, and polymerization and/or cross-linking of the polymer matrix, e.g., via exposure to light, heat, or a suitable catalyst, may be effective to stabilize the desired crystal orientation as shown, for example, in FIGS. 12 and 13.

FIG. 35 is a schematic cross-sectional illustration of a notched reflective polarizer structure having a skin layer according to some embodiments. In the illustrated view, the reflective polarizer has an SABAB... multilayer structure. The skin layer (S), which may have an equivalent refractive index nS = (nA+nB)/2, where nA and nB are the respective indices of the A and B layers, may be configured to impede total internal reflective within the reflective polarizer multilayer. A skin layer may be formed over one or both sides of a polarizer stack and may directly contact a low refractive index substrate supporting the multilayer. In such an example, a low refractive index substrate may have a refractive index that is less than or equal to the refractive index of the skin layer and less than or equal to the equivalent refractive index of the multilayer. In further examples, a skin layer may be omitted and the multilayer ABAB... structure may directly overlie a low refractive index substrate.

The design and optical performance of exemplary multilayer structures, including architectures having an apodized or graduated thickness profile, are shown in FIGS. 36-46. The structures include a supporting glass substrate (n=1.55) and an optional, idealized anti-reflective coating.

In an example multilayer notched reflective polarizer, the thickness of each individual layer may be engineered to enhance performance, such as across a specified spectral band. Whereas each layer in a comparative multilayer may have an equivalent optical thickness (e.g., I/4), in some embodiments, the thickness of each layer may be independently chosen and/or determined using an analytical model. Layer-by-layer and modeled asynchronous approaches are illustrated schematically in FIG. 36.

Referring to FIG. 36A, a multilayer includes alternating first and second polymer layers. The first polymer layers each include a polymer thin film having in-plane refractive indices n1x and n1y, and the second polymer layers each include a polymer thin film having in-plane refractive indices n2x and n2y. As illustrated, a thickness of each successive first polymer layer and a thickness of each correspondingly successive second polymer layer change asynchronously across the multilayer. That is, in regions of the multilayer where a thickness of each successive first polymer layer increases, a thickness of a corresponding and adjacent second polymer layer decreases, and in regions of the multilayer where a thickness of each successive first polymer layer decreases, a thickness of a corresponding and adjacent second polymer layer increases.

With reference to FIG. 36B, a multilayer not falling under the scope of protection includes alternating first and second polymer layers. The first polymer layers may each include a polymer thin film having in-plane refractive indices n1x and n1y, and the second polymer layers may each include a polymer thin film having in-plane refractive indices n2x and n2y. In representative examples, the first and second polymer layers may be considered as AB layer pairs where, for a chosen pair, the thickness of each A polymer layer and each B polymer layer may be substantially equivalent, and the total optical thickness of the pair may correspond to ¼ of the wavelength of light that is reflected.

As illustrated, the layer pairs may arranged such that a total thickness of successive layer pairs changes by less than approximately 20% (e.g., less than 5, 10, 15, or 20%) within a first region of the multilayer and a total thickness of neighboring layer pairs changes by at least approximately 40% (e.g., 40, 45, 50, or 55%) within a second region of the multilayer adjacent to the first region. Thus, the multilayer of FIG. 36B includes at least one discontinuity in thickness.

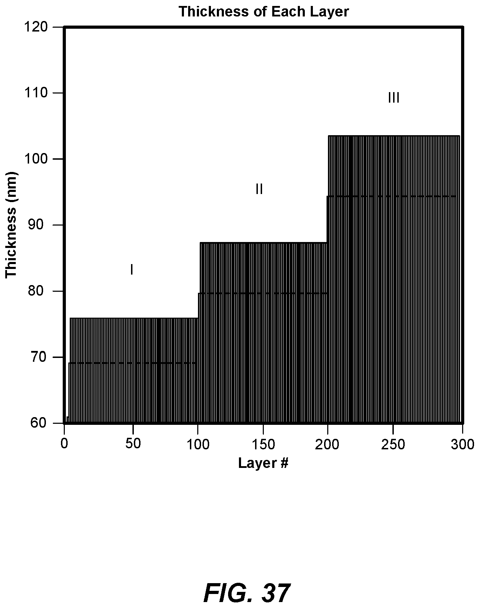

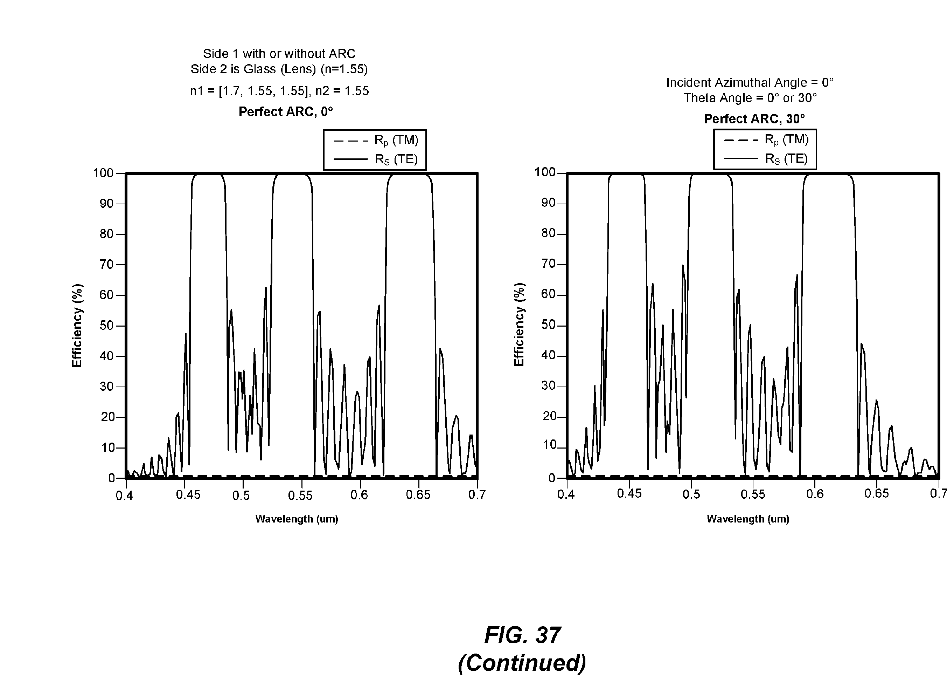

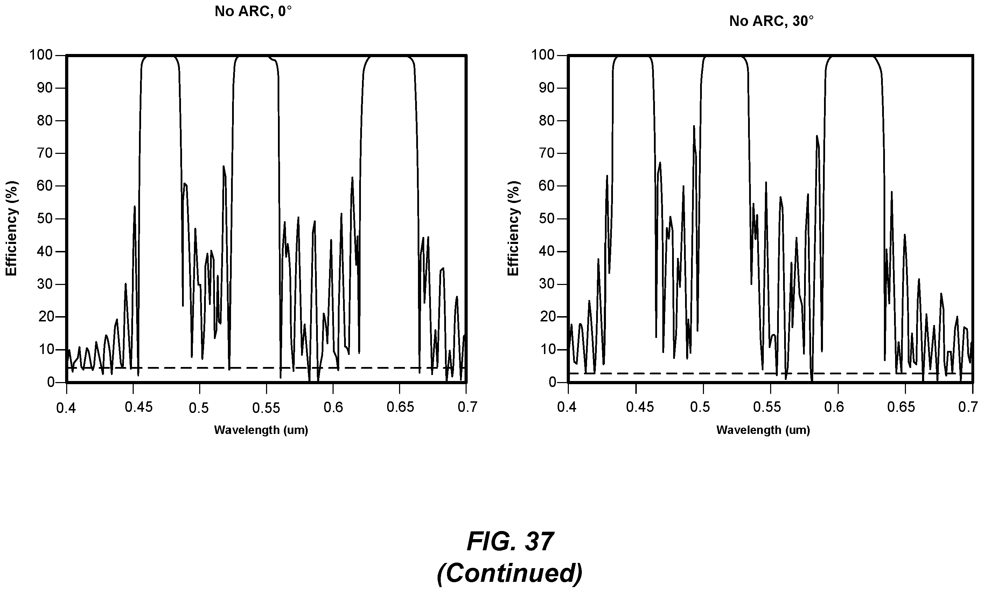

Referring to FIGS. 37-39, a multilayer not falling under the scope of protection includes alternating first and second polymer layers where the layer thicknesses are substantially equal across successive regions of the multilayer that are separately by a thickness discontinuity. Each region (e.g., region I, region II, and region III) may be configured to reflect a selected wavelength of light.

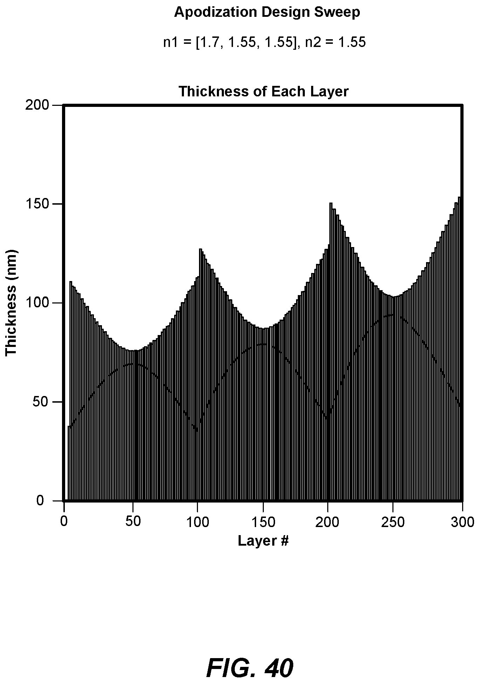

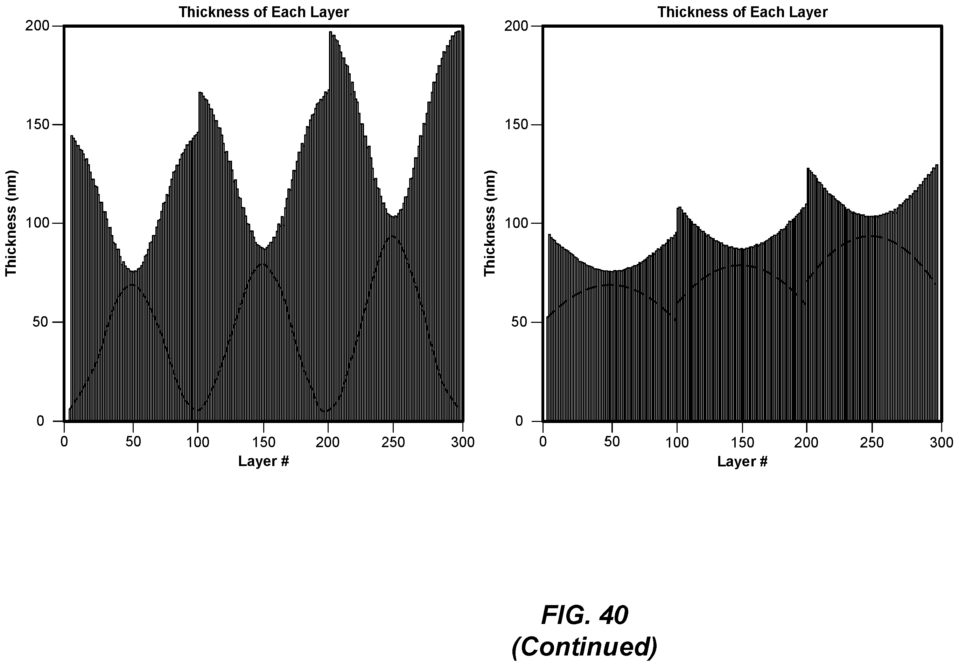

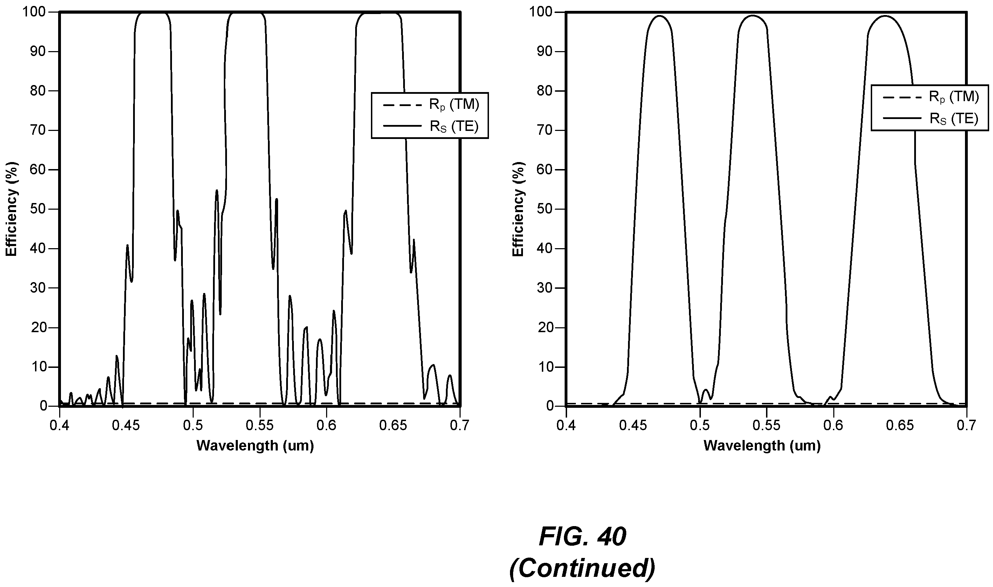

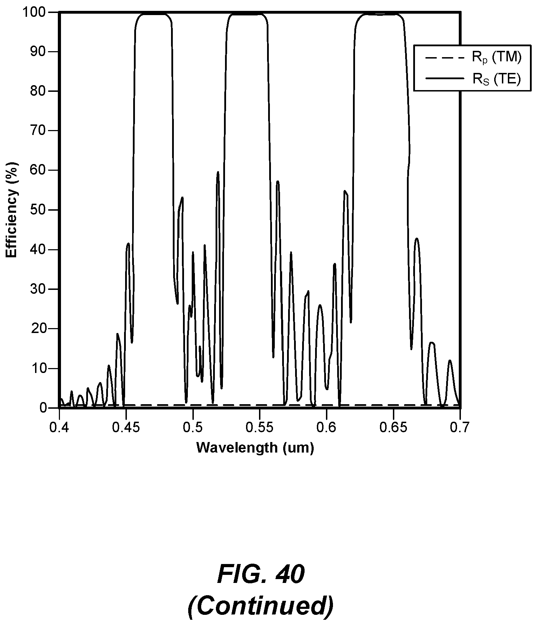

Referring to FIGS. 40-43, a multilayer includes alternating first and second polymer layers where the layer thicknesses change asynchronously throughout the multilayer, as described also in FIG. 36A.

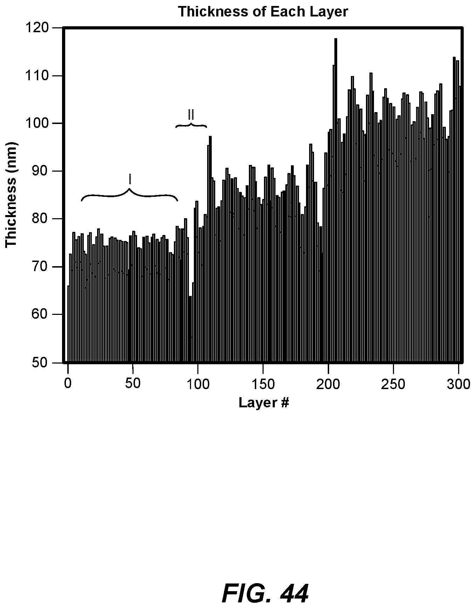

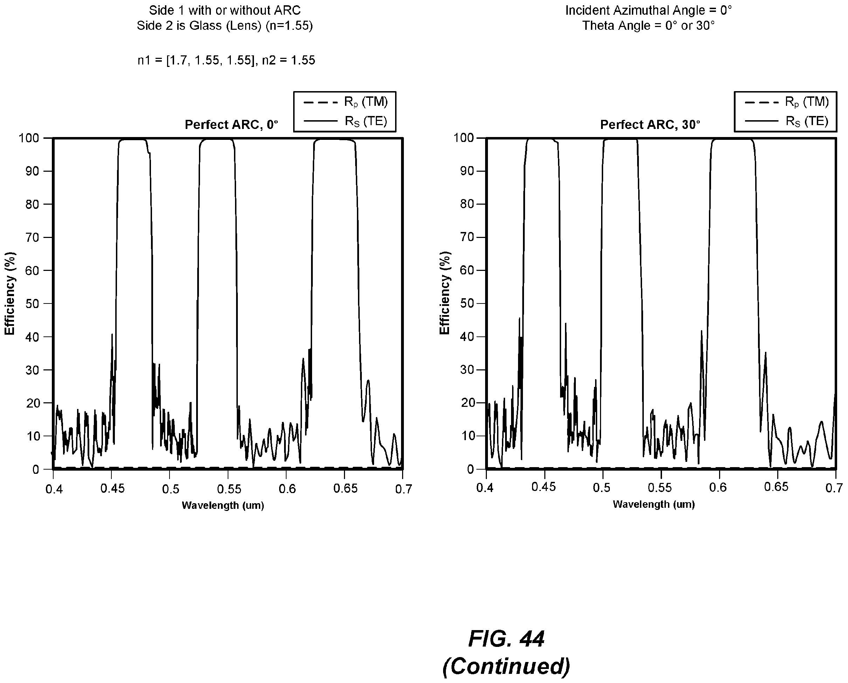

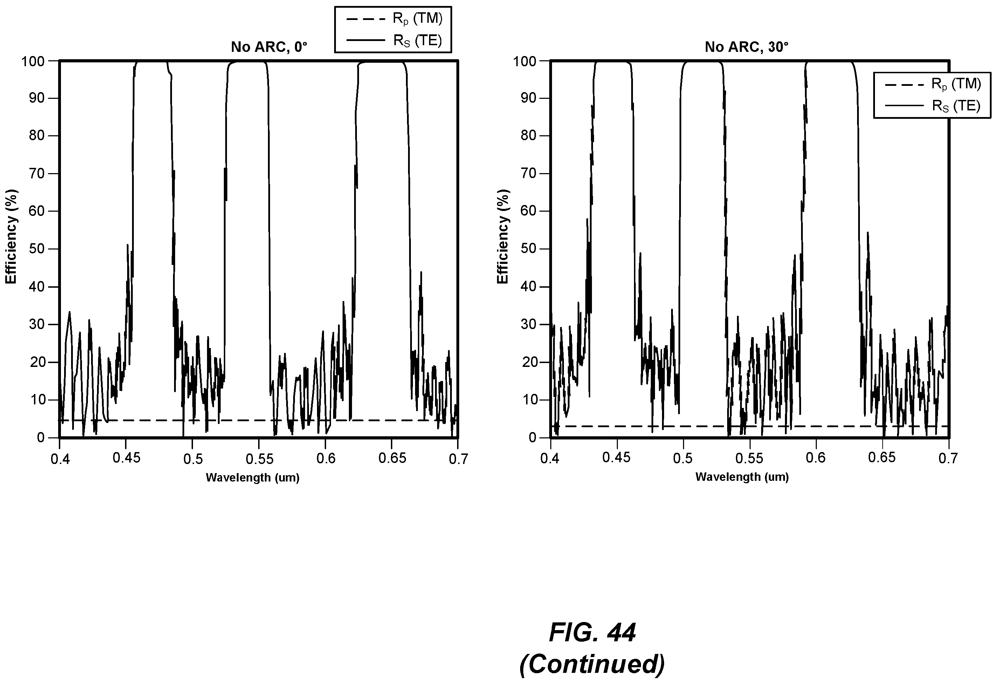

Referring to FIGS. 44-46, a multilayer not falling under the scope of protection includes alternating first and second polymer layers where a thickness difference between neighboring first and second polymer layers is small within a first region (e.g., region I) of the multilayer relative to a substantially greater thickness difference between neighboring first and second polymer layers within a second region (e.g., region II) of the multilayer proximate to the first region. Without wishing to be bound by theory, the anomalous thickness change may suppress reflections proximate to the shoulders of the reflection band for the multilayer.

As disclosed herein, an optical element includes a polymer multilayer defining a notched reflective polarizer (RP). The reflective polarizer stack may include an alternating ABAB... architecture of amorphous, optically isotropic polymer layers and semicrystalline, optically anisotropic polymer layers. Along a block mode of the reflective polarizer, an in-plane refractive index of the anisotropic polymer layers may be greater than an in-plane refractive index of the isotropic polymer layers. On the other hand, along a transmissive (pass) mode orthogonal to the block mode, in-plane refractive indices of the anisotropic and isotropic polymer layers may be substantially equal.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 4700 in FIG. 47) or that visually immerses a user in an artificial reality (such as, e.g., virtual-reality system 4800 in FIG. 48). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 47, augmented-reality system 4700 may include an eyewear device 4702 with a frame 4710 configured to hold a left display device 4715(A) and a right display device 4715(B) in front of a user's eyes. Display devices 4715(A) and 4715(B) may act together or independently to present an image or series of images to a user. While augmented-reality system 4700 includes two displays, embodiments of this disclosure may be implemented in augmented-reality systems with a single NED or more than two NEDs.

In some embodiments, augmented-reality system 4700 may include one or more sensors, such as sensor 4740. Sensor 4740 may generate measurement signals in response to motion of augmented-reality system 4700 and may be located on substantially any portion of frame 4710. Sensor 4740 may represent one or more of a variety of different sensing mechanisms, such as a position sensor, an inertial measurement unit (IMU), a depth camera assembly, a structured light emitter and/or detector, or any combination thereof. In some embodiments, augmented-reality system 4700 may or may not include sensor 4740 or may include more than one sensor. In embodiments in which sensor 4740 includes an IMU, the IMU may generate calibration data based on measurement signals from sensor 4740. Examples of sensor 4740 may include, without limitation, accelerometers, gyroscopes, magnetometers, other suitable types of sensors that detect motion, sensors used for error correction of the IMU, or some combination thereof.

In some examples, augmented-reality system 4700 may also include a microphone array with a plurality of acoustic transducers 4720(A)-4720(J), referred to collectively as acoustic transducers 4720. Acoustic transducers 4720 may represent transducers that detect air pressure variations induced by sound waves. Each acoustic transducer 4720 may be configured to detect sound and convert the detected sound into an electronic format (e.g., an analog or digital format). The microphone array in FIG. 47 may include, for example, ten acoustic transducers: 4720(A) and 4720(B), which may be designed to be placed inside a corresponding ear of the user, acoustic transducers 4720(C), 4720(D), 4720(E), 4720(F), 4720(G), and 4720(H), which may be positioned at various locations on frame 4710, and/or acoustic transducers 4720(I) and 4720(J), which may be positioned on a corresponding neckband 4705.

In some embodiments, one or more of acoustic transducers 4720(A)-(J) may be used as output transducers (e.g., speakers). For example, acoustic transducers 4720(A) and/or 4720(B) may be earbuds or any other suitable type of headphone or speaker.

The configuration of acoustic transducers 4720 of the microphone array may vary. While augmented-reality system 4700 is shown in FIG. 47 as having ten acoustic transducers 4720, the number of acoustic transducers 4720 may be greater or less than ten. In some embodiments, using higher numbers of acoustic transducers 4720 may increase the amount of audio information collected and/or the sensitivity and accuracy of the audio information. In contrast, using a lower number of acoustic transducers 4720 may decrease the computing power required by an associated controller 4750 to process the collected audio information. In addition, the position of each acoustic transducer 4720 of the microphone array may vary. For example, the position of an acoustic transducer 4720 may include a defined position on the user, a defined coordinate on frame 4710, an orientation associated with each acoustic transducer 4720, or some combination thereof.

Acoustic transducers 4720(A) and 4720(B) may be positioned on different parts of the user's ear, such as behind the pinna, behind the tragus, and/or within the auricle or fossa. Or, there may be additional acoustic transducers 4720 on or surrounding the ear in addition to acoustic transducers 4720 inside the ear canal. Having an acoustic transducer 4720 positioned next to an ear canal of a user may enable the microphone array to collect information on how sounds arrive at the ear canal. By positioning at least two of acoustic transducers 4720 on either side of a user's head (e.g., as binaural microphones), augmented-reality device 4700 may simulate binaural hearing and capture a 3D stereo sound field around about a user's head. In some embodiments, acoustic transducers 4720(A) and 4720(B) may be connected to augmented-reality system 4700 via a wired connection 4730, and in other embodiments acoustic transducers 4720(A) and 4720(B) may be connected to augmented-reality system 4700 via a wireless connection (e.g., a BLUETOOTH connection). In still other embodiments, acoustic transducers 4720(A) and 4720(B) may not be used at all in conjunction with augmented-reality system 4700.

Acoustic transducers 4720 on frame 4710 may be positioned in a variety of different ways, including along the length of the temples, across the bridge, above or below display devices 4715(A) and 4715(B), or some combination thereof. Acoustic transducers 4720 may also be oriented such that the microphone array is able to detect sounds in a wide range of directions surrounding the user wearing the augmented-reality system 4700. In some embodiments, an optimization process may be performed during manufacturing of augmented-reality system 4700 to determine relative positioning of each acoustic transducer 4720 in the microphone array.

In some examples, augmented-reality system 4700 may include or be connected to an external device (e.g., a paired device), such as neckband 4705. Neckband 4705 generally represents any type or form of paired device. Thus, the following discussion of neckband 4705 may also apply to various other paired devices, such as charging cases, smart watches, smart phones, wrist bands, other wearable devices, hand-held controllers, tablet computers, laptop computers, other external compute devices, etc.

As shown, neckband 4705 may be coupled to eyewear device 4702 via one or more connectors. The connectors may be wired or wireless and may include electrical and/or non-electrical (e.g., structural) components. In some cases, eyewear device 4702 and neckband 4705 may operate independently without any wired or wireless connection between them. While FIG. 47 illustrates the components of eyewear device 4702 and neckband 4705 in example locations on eyewear device 4702 and neckband 4705, the components may be located elsewhere and/or distributed differently on eyewear device 4702 and/or neckband 4705. In some embodiments, the components of eyewear device 4702 and neckband 4705 may be located on one or more additional peripheral devices paired with eyewear device 4702, neckband 4705, or some combination thereof.

Pairing external devices, such as neckband 4705, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 4700 may be provided by a paired device or shared between a paired device and an eyewear device, thus reducing the weight, heat profile, and form factor of the eyewear device overall while still retaining desired functionality. For example, neckband 4705 may allow components that would otherwise be included on an eyewear device to be included in neckband 4705 since users may tolerate a heavier weight load on their shoulders than they would tolerate on their heads. Neckband 4705 may also have a larger surface area over which to diffuse and disperse heat to the ambient environment. Thus, neckband 4705 may allow for greater battery and computation capacity than might otherwise have been possible on a stand-alone eyewear device. Since weight carried in neckband 4705 may be less invasive to a user than weight carried in eyewear device 4702, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 4705 may be communicatively coupled with eyewear device 4702 and/or to other devices. These other devices may provide certain functions (e.g., tracking, localizing, depth mapping, processing, storage, etc.) to augmented-reality system 4700. In the embodiment of FIG. 47, neckband 4705 may include two acoustic transducers (e.g., 4720(I) and 4720(J)) that are part of the microphone array (or potentially form their own microphone subarray). Neckband 4705 may also include a controller 4725 and a power source 4735.

Acoustic transducers 4720(I) and 4720(J) of neckband 4705 may be configured to detect sound and convert the detected sound into an electronic format (analog or digital). In the embodiment of FIG. 47, acoustic transducers 4720(I) and 4720(J) may be positioned on neckband 4705, thereby increasing the distance between the neckband acoustic transducers 4720(I) and 4720(J) and other acoustic transducers 4720 positioned on eyewear device 4702. In some cases, increasing the distance between acoustic transducers 4720 of the microphone array may improve the accuracy of beamforming performed via the microphone array. For example, if a sound is detected by acoustic transducers 4720(C) and 4720(D) and the distance between acoustic transducers 4720(C) and 4720(D) is greater than, e.g., the distance between acoustic transducers 4720(D) and 4720(E), the determined source location of the detected sound may be more accurate than if the sound had been detected by acoustic transducers 4720(D) and 4720(E).

Controller 4725 of neckband 4705 may process information generated by the sensors on neckband 4705 and/or augmented-reality system 4700. For example, controller 4725 may process information from the microphone array that describes sounds detected by the microphone array. For each detected sound, controller 4725 may perform a direction-of-arrival (DOA) estimation to estimate a direction from which the detected sound arrived at the microphone array. As the microphone array detects sounds, controller 4725 may populate an audio data set with the information. In embodiments in which augmented-reality system 4700 includes an inertial measurement unit, controller 4725 may compute all inertial and spatial calculations from the IMU located on eyewear device 4702. A connector may convey information between augmented-reality system 4700 and neckband 4705 and between augmented-reality system 4700 and controller 4725. The information may be in the form of optical data, electrical data, wireless data, or any other transmittable data form. Moving the processing of information generated by augmented-reality system 4700 to neckband 4705 may reduce weight and heat in eyewear device 4702, making it more comfortable to the user.

Power source 4735 in neckband 4705 may provide power to eyewear device 4702 and/or to neckband 4705. Power source 4735 may include, without limitation, lithium ion batteries, lithium-polymer batteries, primary lithium batteries, alkaline batteries, or any other form of power storage. In some cases, power source 4735 may be a wired power source. Including power source 4735 on neckband 4705 instead of on eyewear device 4702 may help better distribute the weight and heat generated by power source 4735.

As noted, some artificial-reality systems may, instead of blending an artificial reality with actual reality, substantially replace one or more of a user's sensory perceptions of the real world with a virtual experience. One example of this type of system is a head-wom display system, such as virtual-reality system 4800 in FIG. 48, that mostly or completely covers a user's field of view. Virtual-reality system 4800 may include a front rigid body 4802 and a band 4804 shaped to fit around a user's head. Virtual-reality system 4800 may also include output audio transducers 4806(A) and 4806(B). Furthermore, while not shown in FIG. 48, front rigid body 4802 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 4700 and/or virtual-reality system 4800 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., conventional concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 4700 and/or virtual-reality system 4800 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 4700 and/or virtual-reality system 4800 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the present disclosure. The embodiments disclosed herein should be considered in all respects illustrative and not restrictive. Reference should be made to the appended claims in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

It will be understood that when an element such as a layer or a region is referred to as being formed on, deposited on, or disposed "on" or "over" another element, it may be located directly on at least a portion of the other element, or one or more intervening elements may also be present. In contrast, when an element is referred to as being "directly on" or "directly over" another element, it may be located on at least a portion of the other element, with no intervening elements present.

As used herein, the term "substantially" in reference to a given parameter, property, or condition may mean and include to a degree that one of ordinary skill in the art would understand that the given parameter, property, or condition is met with a small degree of variance, such as within acceptable manufacturing tolerances. By way of example, depending on the particular parameter, property, or condition that is substantially met, the parameter, property, or condition may be at least approximately 90% met, at least approximately 95% met, or even at least approximately 99% met.

As used herein, the term "approximately" in reference to a particular numeric value or range of values may, in certain embodiments, mean and include the stated value as well as all values within 10% of the stated value. Thus, by way of example, reference to the numeric value "50" as "approximately 50" may, in certain embodiments, include values equal to 50±5, i.e., values within the range 45 to 55.

While various features, elements or steps of particular embodiments may be disclosed using the transitional phrase "comprising," it is to be understood that alternative embodiments, including those that may be described using the transitional phrases "consisting of" or "consisting essentially of," are implied. Thus, for example, implied alternative embodiments to a polymer thin film that comprises or includes polyethylene naphthalate include embodiments where a polymer thin film consists essentially of polyethylene naphthalate and embodiments where a polymer thin film consists of polyethylene naphthalate.

## Claims

1. A notched filter (100) comprising:
a multilayer comprising alternating first (101) and second (102) polymer layers, the first polymer layers (101) each comprising a polymer thin film having in-plane refractive indices n₁ₓ and n_{1y}, and the second polymer layers (102) each comprising a polymer thin film having in-plane refractive indices n₂ₓ and n_{2y}, wherein a thickness (d1) of each successive first polymer layer (101) and a thickness (d2) of each correspondingly successive second polymer layer (102) change asynchronously throughout the multilayer;
the multilayer comprising
a first region wherein the first polymer layers (101) increase in thickness (d1) throughout the first region while the second polymer layers (102) decrease in thickness (d2) throughout the first region;
**characterized in that** the multilayer further comprises
a second region wherein the first polymer layers (101) decrease in thickness (d1) throughout the second region while the second polymer layers (102) increase in thickness (d2) throughout the second region.

2. The notched filter (100) of claim 1, wherein the first polymer layers (101) each comprise an isotropic polymer thin film and the second polymer layers (102) each comprise an anisotropic polymer thin film.

3. The notched filter (100) of claim 1 or 2, wherein |n₁ₓ₋n_{1y}| < 0.1, n_{2y} > 1.4, and |n₂ₓ-n_{2y}| > 0.01.

4. The notched filter (100) of any preceding claim, wherein n_{2y} > 1.7, and |n₂ₓ - n_{2y} | > 0.01.

5. The notched filter (100) of any preceding claim, wherein the multilayer is configured to:
reflect a band of incident light with a relative intensity of less than approximately 90%; or
reflect a band of incident light with a relative intensity of approximately 100%.

6. The notched filter (100) of any preceding claim, wherein the multilayer is configured to:
reflect a band of incident light with a reflected bandwidth of less than approximately 100 nm; or
transmit a band of incident light with a transmitted bandwidth of less than approximately 100 nm.

## Patentansprüche

1. Ein Kerbfilter (100), der Folgendes beinhaltet:
eine Mehrschicht, die abwechselnde erste (101) und zweite (102) Polymerschichten beinhaltet, wobei die ersten Polymerschichten (101) jeweils einen Polymerdünnfilm beinhalten, der in der Ebene liegende Brechungsindizes n₁ₓ und n_{1y} aufweist, und die zweiten Polymerschichten (102) jeweils einen Polymerdünnfilm beinhalten, der in der Ebene liegende Brechungsindizes n₂ₓ und n_{2y} aufweist, wobei sich eine Dicke (d1) jeder nachfolgenden ersten Polymerschicht (101) und eine Dicke (d2) jeder entsprechend nachfolgenden zweiten Polymerschicht (102) in der gesamten Mehrschicht asynchron ändern;
wobei die Mehrschicht einen ersten Bereich beinhaltet, wobei die Dicke (d1) der ersten Polymerschichten (101) im gesamten ersten Bereich zunimmt, während die Dicke (d2) der zweiten Polymerschichten (102) im gesamten ersten Bereich abnimmt;
**dadurch gekennzeichnet, dass** die Mehrschicht ferner einen zweiten Bereich beinhaltet, wobei die Dicke (d1) der ersten Polymerschichten (101) im gesamten zweiten Bereich abnimmt, während die Dicke (d2) der zweiten Polymerschichten (102) im gesamten zweiten Bereich zunimmt.

2. Kerbfilter (100) gemäß Anspruch 1, wobei die ersten Polymerschichten (101) jeweils einen isotropen Polymerdünnfilm beinhalten und die zweiten Polymerschichten (102) jeweils einen anisotropen Polymerdünnfilm beinhalten.

3. Kerbfilter (100) gemäß Anspruch 1 oder 2, wobei | n₁ₓ - n_{1y} | < 0,1, n_{2y} > 1,4 und | n₂ₓ - n_{2y} | > 0,01.

4. Kerbfilter (100) gemäß einem der vorhergehenden Ansprüche, wobei n_{2y} > 1,7 und | n₂ₓ - n_{2y} | > 0,01.

5. Kerbfilter (100) gemäß einem der vorhergehenden Ansprüche, wobei die Mehrschicht für Folgendes konfiguriert ist:
Reflektieren eines Bandes von einfallendem Licht mit einer relativen Intensität von weniger als ungefähr 90 %; oder
Reflektieren eines Bandes von einfallendem Licht mit einer relativen Intensität von ungefähr 100 %.

6. Kerbfilter (100) gemäß einem der vorhergehenden Ansprüche, wobei die Mehrschicht für Folgendes konfiguriert ist:
Reflektieren eines Bandes von einfallendem Licht mit einer reflektierten Bandbreite von weniger als ungefähr 100 nm; oder
Durchlassen eines Bandes von einfallendem Licht mit einer Durchlassbandbreite von weniger als ungefähr 100 nm.

## Revendications

1. Un filtre à encoche (100) comprenant :
un multicouche comprenant des premières (101) et deuxièmes (102) couches de polymère alternées, les premières couches de polymère (101) comprenant chacune un film mince de polymère présentant les indices de réfraction dans le plan n₁ₓ et n_{1y}, et
les deuxièmes couches de polymère (102) comprenant chacune un film mince de polymère présentant les indices de réfraction dans le plan n₂ₓ et n_{2y}, où une épaisseur (d1) de chaque première couche de polymère (101) successive et une épaisseur (d2) de chaque deuxième couche de polymère (102) successive correspondante changent de manière asynchrone au sein de tout le multicouche ;
le multicouche comprenant une première région où les premières couches de polymère (101) augmentent en épaisseur (d1) au sein de toute la première région tandis que les deuxièmes couches de polymère (102) diminuent en épaisseur (d2) au sein de toute la première région ;
**caractérisé en ce que** le multicouche comprend en outre une deuxième région où les premières couches de polymère (101) diminuent en épaisseur (d1) au sein de toute la deuxième région tandis que les deuxièmes couches de polymère (102) augmentent en épaisseur (d2) au sein de toute la deuxième région.

2. Le filtre à encoche (100) de la revendication 1, où les premières couches de polymère (101) comprennent chacune un film mince de polymère isotrope et les deuxièmes couches de polymère (102) comprennent chacune un film mince de polymère anisotrope.

3. Le filtre à encoche (100) de la revendication 1 ou de la revendication 2, où | n₁ₓ - n_{1y} | < 0,1, n_{2y} > 1,4, et | n₂ₓ - n_{2y} | > 0,01.

4. Le filtre à encoche (100) de n'importe quelle revendication précédente, où n_{2y} > 1,7, et |n₂ₓ - n_{2y} | > 0,01.

5. Le filtre à encoche (100) de n'importe quelle revendication précédente, où le multicouche est configuré pour :
réfléchir une bande de lumière incidente avec une intensité relative de moins d'approximativement 90 % ; ou bien
réfléchir une bande de lumière incidente avec une intensité relative d'approximativement 100 %.

6. Le filtre à encoche (100) de n'importe quelle revendication précédente, où le multicouche est configuré pour :
réfléchir une bande de lumière incidente avec une bande passante réfléchie de moins d'approximativement 100 nm ; ou
transmettre une bande de lumière incidente avec une bande passante transmise de moins d'approximativement 100 nm.
